(19) **Europäisches Patentamt**
**European Patent Office**
**Office européen des brevets**

(11) **EP 4 773 528 A1**

(12) **EUROPEAN PATENT APPLICATION**
published in accordance with Art. 153(4) EPC

(43) Date of publication:
08.07.2026 Bulletin 2026/28

(51) International Patent Classification (IPC):
$H04L\ 1/00^{(2006.01)}$    $H04L\ 1/18^{(2023.01)}$

(21) Application number: 23952747.6

(52) Cooperative Patent Classification (CPC):
H04L 1/00; H04L 1/18

(22) Date of filing: 22.09.2023

(86) International application number:
PCT/CN2023/120838

(87) International publication number:
WO 2025/060095 (27.03.2025 Gazette 2025/13)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **HUAWEI TECHNOLOGIES CO., LTD.**
**Shenzhen 518129 (CN)**

(72) Inventors:
• **WANG, Xianbin**
**Shenzhen, Guangdong 518129 (CN)**
• **TONG, Jiajie**
**Shenzhen, Guangdong 518129 (CN)**

• **ZHANG, Huazi**
**Shenzhen, Guangdong 518129 (CN)**
• **QIN, Kangjian**
**Shenzhen, Guangdong 518129 (CN)**
• **LIU, Ke**
**Shenzhen, Guangdong 518129 (CN)**
• **WANG, Jun**
**Shenzhen, Guangdong 518129 (CN)**
• **TONG, Wen**
**Shenzhen, Guangdong 518129 (CN)**
• **DU, Yinggang**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD FOR COMMUNICATION, AND DEVICE, STORAGE MEDIUM AND PROGRAM PRODUCT**

(57) Embodiments of this application provide a communication method, a device, a storage medium, and a program product. In the method, an encoding apparatus performs polar encoding on a first bit sequence during data retransmission, to obtain a second bit sequence. The encoding apparatus performs first interleaving based on the second bit sequence, to obtain a third bit sequence. The encoding apparatus outputs one or more bits in the third bit sequence, where the first bit sequence includes a part of information bits of an input bit sequence for initial data transmission, and the initial data transmission corresponds to the data retransmission. In this way, error correction performance during a small quantity of retransmissions and error correction performance during a large quantity of retransmissions can be balanced, and good error correction performance can be achieved under conditions of different amounts of retransmitted data.

FIG. 2

## Description

## TECHNICAL FIELD

Embodiments of this application generally relate to the communication field, and more specifically, to a communication method, a terminal device, a network device, a computer-readable storage medium, and a computer program product.

## BACKGROUND

A polar code (Polar code) is a first channel coding scheme that can "reach" a Shannon channel capacity, and has features such as good error correction performance and low decoding complexity. Hybrid automatic repeat request (Hybrid Automatic Repeat Request, HARQ) transmission is a general technology in wireless communication. The hybrid automatic repeat request combines a forward error correction (Forward Error Correction, FEC) code and an automatic repeat request (Automatic Repeat Request, ARQ) method, to significantly improve spectral efficiency.

However, when the polar code is used as the FEC for the hybrid automatic repeat request, resource scheduling needs to be optimized.

## SUMMARY

Embodiments of this application provide a technical solution for data interleaving, to adapt resource scheduling to transmit different amounts of retransmitted data, and implement good error correction performance under conditions of the different amounts of retransmitted data.

According to a first aspect, a communication method is provided. The method may be performed by an encoding apparatus, or may be performed by a chip applied to an encoding apparatus. The following describes an example in which the method is performed by the encoding apparatus. In the method, the encoding apparatus performs polar encoding on a first bit sequence during data retransmission, to obtain a second bit sequence. The encoding apparatus performs first interleaving based on the second bit sequence, to obtain a third bit sequence. The encoding apparatus outputs one or more bits in the third bit sequence, where the first bit sequence includes a part of information bits of an input bit sequence for initial data transmission, and the initial data transmission corresponds to the data retransmission. In this way, error correction performance during a small quantity of retransmissions and error correction performance during a large quantity of retransmissions can be balanced, and good error correction performance can be achieved under conditions of different amounts of retransmitted data.

In some implementations, that the encoding apparatus performs the first interleaving includes: The encoding apparatus divides the second bit sequence into a plurality of subblocks; and performs subblock interleaving on the plurality of subblocks, to obtain the third bit sequence. In this way, implementation of interleaving is simplified in a subblock interleaving manner, thereby improving efficiency, and balancing error correction performance during a small quantity of retransmissions and error correction performance during a large quantity of retransmissions.

In some implementations, the plurality of subblocks include same quantities of bits. In this way, implementation of subblock interleaving is simplified by using same quantities of bits included in the subblock, thereby improving efficiency.

In some implementations, the second bit sequence is divided into 32 subblocks. In this way, a proper quantity of subblocks is divided, thereby improving interleaving efficiency.

In some implementations, an order of the 32 subblock-interleaved subblocks included in the third bit sequence is one of the following: [0, 1, 2, 4, 3, 5, 6, 7, 8, 16, 9, 17, 10, 18, 11, 19, 12, 20, 13, 21, 14, 22, 15, 23, 24, 25, 26, 28, 27, 29, 30, 31]; [0, 4, 8, 12, 1, 5, 11, 13, 2, 6, 10, 14, 3, 7, 11, 15, 16, 20, 24, 28, 17, 21, 25, 29, 18, 22, 26, 30, 19, 23, 27, 31]; or [0, 8, 16, 24, 1, 9, 17, 25, 2, 10, 18, 26, 3, 11, 19, 27, 4, 12, 20, 28, 5, 13, 21, 29, 6, 14, 22, 30, 7, 15, 23, 31]. [0, 1, 2, 4, 3, 5, 6, 7, 8, 16, 9, 17, 10, 18, 11, 19, 12, 20, 13, 21, 14, 22, 15, 23, 24, 25, 26, 28, 27, 29, 30, 31] may be compatible with new radio (New Radio, NR) and is conducive to promotion. [0, 4, 8, 12, 1, 5, 11, 13, 2, 6, 10, 14, 3, 7, 11, 15, 16, 20, 24, 28, 17, 21, 25, 29, 18, 22, 26, 30, 19, 23, 27, 31] has excellent performance and a good error correction capability. [0, 8, 16, 24, 1, 9, 17, 25, 2, 10, 18, 26, 3, 11, 19, 27, 4, 12, 20, 28, 5, 13, 21, 29, 6, 14, 22, 30, 7, 15, 23, 31] has low implementation complexity, to improve efficiency.

In some implementations, the first interleaving is bit interleaving. In this way, fine interleaving can be implemented to perform error correction.

In some implementations, a quantity of the sent one or more bits is determined based on a resource scheduled to convey the first bit sequence. In this way, a quantity of sent bits can be flexibly determined based on a resource scheduled to convey the first bit sequence, thereby well adapting to a channel environment, and improving error correction performance.

In some implementations, a quantity of bits scheduled to convey the first bit sequence is E and is not an integer multiple of a bit length of a subblock group, each subblock group includes Z subblocks, and a bit length of each subblock is L; and the encoding apparatus further selects, from the third bit sequence, an integer quantity, obtained by rounding down E/(L*Z), of subblock groups, to form a fourth bit sequence whose bit length is E0; performs second interleaving on a subblock group after the integer quantity of subblock groups, to obtain a bit sequence obtained through the second interleaving; determines a fifth bit sequence from the bit sequence obtained through the second interleaving, where a bit length of the fifth bit sequence is E-E0; and obtains, based on the fourth bit sequence and the fifth bit sequence, the one or more bits to be output in the third bit sequence. In this way, error correction performance during fine-granularity transmission can be improved, and good error correction performance can be obtained when a quantity of transmitted bits is not an integer multiple of a bit length of a subblock group.

In some implementations, the second interleaving includes at least one of row-column interleaving, random interleaving, triangular interleaving, or reverse interleaving; and a value of L is one of 2, 4, and 8. In this way, second interleaving can be flexibly implemented, and subblocks can be flexibly divided, thereby obtaining good error correction performance.

In some implementations, the first interleaving includes at least one of the following: random interleaving, triangular interleaving, row-column interleaving, or reverse interleaving. In this way, the first interleaving can be flexibly implemented in various manners, thereby improving error correction performance.

In some implementations, the polar encoding is first polar encoding; the third bit sequence is generated for retransmitting the first bit sequence; and before or during the retransmission, a sixth bit sequence used to initially transmit the input bit sequence is generated through second polar encoding. That the encoding apparatus performs the polar encoding on the first bit sequence, to obtain the second bit sequence includes: The encoding apparatus performs the first polar encoding on the first bit sequence, to obtain a first-polar-encoded sequence; and obtains the second bit sequence based on exclusive OR on the first-polar-encoded sequence and the sixth bit sequence, where two subcodes of a long polar code are constituted through the first polar encoding and the second polar encoding. In this way, the first polar encoding is used for initial transmission, the second polar encoding is used for retransmission, and a long polar code is constituted through the first polar encoding and the second polar encoding, thereby improving overall error correction performance. The initial transmission and the retransmission are performed in order or simultaneously, thereby improving flexibility.

According to a second aspect, a communication method is provided. The method may be performed by an encoding apparatus, or may be performed by a chip applied to an encoding apparatus. The following describes an example in which the method is performed by the encoding apparatus. In the method, the encoding apparatus performs polar encoding on a first bit sequence during data retransmission, to obtain a third bit sequence. The encoding apparatus outputs one or more bits in a second bit sequence in a unit of subblock, where the first bit sequence includes a part of information bits of an input bit sequence for initial data transmission, and the initial data transmission corresponds to the data retransmission. A quantity of bits scheduled to convey the first bit sequence is E and is not an integer multiple of a bit length of a subblock group, each subblock group includes Z subblocks, and a bit length of each subblock is L. That the encoding apparatus outputs the one or more bits in the second bit sequence in the unit of subblock includes: The encoding apparatus selects, from the second bit sequence, an integer quantity, obtained by rounding down E/(L*Z), of subblock groups, to form a fourth bit sequence whose bit length is E0; performs second interleaving on one subblock group after the integer quantity of subblock groups, to obtain a bit sequence obtained through the second interleaving; determines a fifth bit sequence from the bit sequence obtained through the second interleaving, where a bit length of the fifth bit sequence is E-E0; and obtains, based on the fourth bit sequence and the fifth bit sequence, the one or more bits to be output in the second bit sequence. In this way, error correction performance during a small quantity of retransmissions and error correction performance during a large quantity of retransmissions can be balanced, and good error correction performance can be achieved under conditions of different amounts of retransmitted data.

According to a third aspect, a communication method is provided. The method may be performed by a decoding apparatus, or may be performed by a chip applied to a decoding apparatus. The following describes an example in which the method is performed by the decoding apparatus. In the method, the decoding apparatus obtains a third symbol sequence during data retransmission. The decoding apparatus performs first de-interleaving based on the third symbol sequence to obtain a second symbol sequence. The decoding apparatus performs polar decoding on the second symbol sequence to obtain a first bit sequence, where the first bit sequence includes a part of information bits of an input bit sequence for initial data transmission, and the initial data transmission corresponds to the data retransmission. In this way, error correction performance during a small quantity of retransmissions and error correction performance during a large quantity of retransmissions can be balanced, and good error correction performance can be achieved under conditions of different amounts of retransmitted data.

In some implementations, that the decoding apparatus performs the first de-interleaving includes: The decoding apparatus divides the third symbol sequence into a plurality of subblocks; and performs subblock de-interleaving on the plurality of subblocks to obtain the second symbol sequence. In this way, implementation of de-interleaving is simplified in a subblock de-interleaving manner, thereby improving efficiency, and balancing error correction performance during a small quantity of retransmissions and error correction performance during a large quantity of retransmissions.

In some implementations, the plurality of subblocks include same quantities of symbols. In this way, implementation of subblock de-interleaving is simplified by using same quantities of bits included in the subblock, thereby improving efficiency.

In some implementations, the third symbol sequence is divided into 32 subblocks. In this way, a proper quantity of subblocks is divided, thereby improving de-interleaving efficiency.

In some implementations, a subblock interleaving order corresponding to an order of the 32 subblock-de-interleaved subblocks included in the third symbol sequence is one of the following: [0, 1, 2, 4, 3, 5, 6, 7, 8, 16, 9, 17, 10, 18, 11, 19, 12, 20, 13, 21, 14, 22, 15, 23, 24, 25, 26, 28, 27, 29, 30, 31]; [0, 4, 8, 12, 1, 5, 11, 13, 2, 6, 10, 14, 3, 7, 11, 15, 16, 20, 24, 28, 17, 21, 25, 29, 18, 22, 26, 30, 19, 23, 27, 31]; or [0, 8, 16, 24, 1, 9, 17, 25, 2, 10, 18, 26, 3, 11, 19, 27, 4, 12, 20, 28, 5, 13, 21, 29, 6, 14, 22, 30, 7, 15, 23, 31]. [0, 1, 2, 4, 3, 5, 6, 7, 8, 16, 9, 17, 10, 18, 11, 19, 12, 20, 13, 21, 14, 22, 15, 23, 24, 25, 26, 28, 27, 29, 30, 31] may be compatible with new radio (New Radio, NR) and is conducive to promotion. [0, 4, 8, 12, 1, 5, 11, 13, 2, 6, 10, 14, 3, 7, 11, 15, 16, 20, 24, 28, 17, 21, 25, 29, 18, 22, 26, 30, 19, 23, 27, 31] has excellent performance and a good error correction capability. [0, 8, 16, 24, 1, 9, 17, 25, 2, 10, 18, 26, 3, 11, 19, 27, 4, 12, 20, 28, 5, 13, 21, 29, 6, 14, 22, 30, 7, 15, 23, 31] has low implementation complexity, to improve efficiency.

In some implementations, the first de-interleaving is symbol de-interleaving. In this way, fine de-interleaving can be implemented to perform error correction.

In some implementations, that the decoding apparatus obtains the third symbol sequence during the data retransmission includes: The decoding apparatus receives a retransmission symbol sequence during the data retransmission; and adds a padding symbol sequence to the retransmission symbol sequence to obtain the third symbol sequence. In this way, adaptation to a subblock length is implemented.

In some implementations, a quantity of retransmission symbol sequences is determined based on a resource scheduled to convey the first bit sequence. In this way, a quantity of sent bits can be flexibly determined based on a resource scheduled to convey the first bit sequence, thereby well adapting to a channel environment, and improving error correction performance.

In some implementations, a quantity of symbols scheduled to convey the first bit sequence is E and is not an integer multiple of a symbol length of a subblock group, each subblock group includes Z subblocks, and a symbol length of each subblock is L. In addition, the decoding apparatus further selects, from the third symbol sequence, an integer quantity, obtained by rounding down E/(L*Z), of subblock groups, to form a fourth bit sequence whose symbol length is E0. The decoding apparatus performs second de-interleaving on a subblock group after the integer quantity of subblock groups, to obtain a symbol sequence obtained through the second de-interleaving. The decoding apparatus determines a fifth symbol sequence from the symbol sequence obtained through the second de-interleaving, where a symbol length of the fifth symbol sequence is E-E0. The decoding apparatus obtains the second symbol sequence based on the fourth symbol sequence, the fifth symbol sequence, and the padding symbol sequence. In this way, error correction performance during fine-granularity transmission can be improved, and good error correction performance can be obtained when a quantity of transmitted bits is not an integer multiple of a bit length of a subblock group.

In some implementations, the second de-interleaving includes at least one of row-column de-interleaving, random de-interleaving, triangular de-interleaving, or reverse de-interleaving, and a value of L is one of 2, 4, and 8. In this way, second de-interleaving can be flexibly implemented, and subblocks can be flexibly divided, thereby obtaining good error correction performance.

In some implementations, the first de-interleaving includes at least one of the following: random de-interleaving, triangular de-interleaving, row-column de-interleaving, or reverse de-interleaving. In this way, the first interleaving can be flexibly implemented in various manners, thereby improving error correction performance.

In some implementations, the polar decoding is first polar decoding, and the third symbol sequence is generated for retransmitting the first bit sequence. Before or during the retransmission, the decoding apparatus uses second polar decoding to obtain the input bit sequence for the initial data transmission; and two subcodes of long polar decoding are constituted through the first polar decoding and the second polar decoding. In this way, the first polar encoding is used for initial transmission, the second polar encoding is used for retransmission, and a long polar code is constituted through the first polar encoding and the second polar encoding, thereby improving overall error correction performance. The initial transmission and the retransmission are performed in order or simultaneously, thereby improving flexibility.

According to a fourth aspect, a communication method is provided. The method may be performed by a decoding apparatus, or may be performed by a chip applied to a decoding apparatus. The following describes an example in which the method is performed by the decoding apparatus. In the method, the decoding apparatus receives a retransmission symbol sequence during data retransmission. The decoding apparatus adds a padding symbol sequence to the retransmission symbol sequence to obtain a third symbol sequence. The decoding apparatus performs second de-interleaving on a part of the third symbol sequence to obtain a second symbol sequence. The decoding apparatus performs polar decoding on the second symbol sequence to obtain a first bit sequence, where the first bit sequence includes a part of information bits of an input bit sequence for initial data transmission, and the initial data transmission corresponds to the data retransmission. A quantity of bits scheduled to convey the first bit sequence is E and is not an integer multiple of a bit length of a subblock group, each subblock group includes Z subblocks, and a bit length of each subblock is L. That the decoding apparatus performs the second de-interleaving on the part of the third symbol sequence to obtain the second symbol sequence includes: The decoding apparatus selects, from a third bit sequence, an integer quantity, obtained by rounding down E/(L*Z), of subblock groups, to form a fourth symbol sequence whose length is E0. The decoding apparatus performs the second de-interleaving on one subblock group after the integer quantity of subblock groups, to obtain a symbol sequence obtained through the second de-interleaving. The decoding apparatus determines a fifth symbol sequence from the symbol sequence obtained through the second de-interleaving, where a bit length of the fifth symbol sequence is E-E0. The decoding apparatus obtains the third symbol sequence based on the fourth symbol sequence, the fifth symbol sequence, and the padding symbol sequence. In this way, error correction performance during a small quantity of retransmissions and error correction performance during a large quantity of retransmissions can be balanced, and good error correction performance can be achieved under conditions of different amounts of retransmitted data.

According to a fifth aspect, an apparatus is provided. The apparatus may be the encoding apparatus in the foregoing method embodiment, or may be a chip disposed in the encoding apparatus. The apparatus includes: a polar encoding module, configured to perform polar encoding on a first bit sequence during data retransmission, to obtain a second bit sequence; an interleaving module, configured to perform first interleaving based on the second bit sequence to obtain a third bit sequence; and an output module, configured to output one or more bits in the third bit sequence, where the first bit sequence includes a part of information bits of an input bit sequence for initial data transmission, and the initial data transmission corresponds to the data retransmission. In this way, error correction performance during a small quantity of retransmissions and error correction performance during a large quantity of retransmissions can be balanced, and good error correction performance can be achieved under conditions of different amounts of retransmitted data.

According to a sixth aspect, an apparatus is provided. The apparatus may be the encoding apparatus in the foregoing method embodiment, or may be a chip disposed in the encoding apparatus. The apparatus includes: a second bit sequence obtaining module, configured to perform polar encoding on a first bit sequence during data retransmission, to obtain a second bit sequence; and a subblock output module, configured to output one or more bits in the second bit sequence in a unit of subblock, where the first bit sequence includes a part of information bits of an input bit sequence for initial data transmission, the initial data transmission corresponds to the data retransmission, a quantity of bits scheduled to convey the first bit sequence is E and is not an integer multiple of a bit length of a subblock group, each subblock group includes Z subblocks, and a bit length of each subblock is L; and outputting the one or more bits in the second bit sequence in the unit of subblock includes: selecting, from the second bit sequence, an integer quantity, obtained by rounding down E/(L*Z), of subblock groups, to form a fourth bit sequence whose bit length is E0; performing second interleaving on one subblock group after the integer quantity of subblock groups, to obtain a bit sequence obtained through the second interleaving; determining a fifth bit sequence from the bit sequence obtained through the second interleaving, where a bit length of the fifth bit sequence is E-E0; and obtaining, based on the fourth bit sequence and the fifth bit sequence, the one or more bits to be output in the second bit sequence. In this way, error correction performance during a small quantity of retransmissions and error correction performance during a large quantity of retransmissions can be balanced, and good error correction performance can be achieved under conditions of different amounts of retransmitted data.

According to a seventh aspect, an apparatus is provided. The apparatus may be the decoding apparatus in the foregoing method embodiment, or may be a chip disposed in the decoding apparatus. The apparatus includes: a symbol sequence receiving module, configured to receive a retransmission symbol sequence during data retransmission; a padding module, configured to add a padding symbol sequence to the retransmission symbol sequence to obtain a third symbol sequence; a first de-interleaving module, configured to perform first de-interleaving based on the third symbol sequence to obtain a second symbol sequence; and a polar decoding module, configured to perform polar decoding on the second symbol sequence to obtain a first bit sequence, where the first bit sequence includes a part of information bits of an input bit sequence for initial data transmission, and the initial data transmission corresponds to the data retransmission. In this way, error correction performance during a small quantity of retransmissions and error correction performance during a large quantity of retransmissions can be balanced, and good error correction performance can be achieved under conditions of different amounts of retransmitted data.

According to an eighth aspect, an apparatus is provided. The apparatus may be the decoding apparatus in the foregoing method embodiment, or may be a chip disposed in the decoding apparatus. The apparatus includes: a symbol sequence receiving module, configured to receive a retransmission symbol sequence during data retransmission; a padding module, configured to add a padding symbol sequence to the retransmission symbol sequence to obtain a third symbol sequence; a second de-interleaving module, configured to perform second de-interleaving on a part of the third symbol sequence to obtain a second symbol sequence; and a polar decoding module, configured to perform polar decoding on the second symbol sequence to obtain a first bit sequence, where the first bit sequence includes a part of information bits of an input bit sequence for initial data transmission, and the initial data transmission corresponds to the data retransmission, a quantity of bits scheduled to convey the first bit sequence is E and is not an integer multiple of a bit length of a subblock group, each subblock group includes Z subblocks, and a bit length of each subblock is L; and performing the second de-interleaving on the part of the third symbol sequence to obtain the second symbol sequence includes: selecting, from a third bit sequence, an integer quantity, obtained by rounding down E/(L*Z), of subblock groups, to form a fourth symbol sequence whose bit length is E0; performing second de-interleaving on one subblock group after the integer quantity of subblock groups, to obtain a symbol sequence obtained through the second de-interleaving; and determining a fifth symbol sequence from the symbol sequence obtained through the second de-interleaving, where a symbol length of the fifth symbol sequence is E-E0; and obtaining the third symbol sequence based on the fourth symbol sequence, the fifth symbol sequence, and the padding symbol sequence. In this way, error correction performance during a small quantity of retransmissions and error correction performance during a large quantity of retransmissions can be balanced, and good error correction performance can be achieved under conditions of different amounts of retransmitted data.

According to a ninth aspect, a communication device is provided. The communication device may be the encoding apparatus in the foregoing method embodiment, or may be a chip disposed in the encoding apparatus. The communication device includes a processor and a memory. The memory is configured to store a computer program or instructions. When the processor runs the computer program or the instructions, the communication apparatus is enabled to perform the method performed by the encoding apparatus in the foregoing method embodiments.

According to a tenth aspect, a communication device is provided. The communication device may be the decoding apparatus in the foregoing method embodiment, or may be a chip disposed in the decoding apparatus. The communication device includes a processor and a memory. The memory is configured to store a computer program or instructions. When the processor runs the computer program or the instructions, the communication apparatus is enabled to perform the method performed by the decoding apparatus in the foregoing method embodiments.

According to an eleventh aspect, this application provides a computer-readable storage medium. The computer-readable storage medium stores machine-executable instructions, and when the machine-executable instructions are run, the method performed by the encoding apparatus in the foregoing aspects is implemented.

According to a twelfth aspect, this application provides a computer-readable storage medium. The computer-readable storage medium stores machine-executable instructions, and when the machine-executable instructions are run, the method performed by the decoding apparatus in the foregoing aspects is implemented.

According to a thirteenth aspect, a computer program product is provided. The computer program product includes computer program code, and when the computer program code is run, the method performed by the encoding apparatus in the foregoing aspects is performed.

According to a fourteenth aspect, a computer program product is provided. The computer program product includes computer program code, and when the computer program code is run, the method performed by the decoding apparatus in the foregoing aspects is performed.

## BRIEF DESCRIPTION OF DRAWINGS

FIG. 1A shows a communication system in which embodiments of this application can be implemented;
FIG. 1B is a block diagram of a communication system according to an embodiment of this application;
FIG. 1C is a diagram of polar encoding according to an embodiment of this application;
FIG. 1D is a diagram of IR-HARQ of a polar code according to an embodiment of this application;
FIG. 1E is a diagram of a self-decodable polar code according to an embodiment of this application;
FIG. 1F is a diagram of mismatch between a retransmission code length and a scheduling capacity according to an embodiment of this application;
FIG. 1G is a diagram of mismatch between a retransmission code length and a scheduling capacity according to another embodiment of this application;
FIG. 2 is a diagram of interleaving performed after retransmission polar encoding according to an embodiment of this application;
FIG. 3 is a diagram of a structure of an encoder side according to an embodiment of this application;
FIG. 4A is a diagram of subblock interleaving according to an embodiment of this application;
FIG. 4B is a diagram of subblock interleaving according to another embodiment of this application;
FIG. 5A is a diagram of subblock group partial interleaving according to an embodiment of this application;
FIG. 5B is a diagram of subblock group partial interleaving according to another embodiment of this application;
FIG. 6 is a diagram of a structure of a decoder side according to an embodiment of this application;
FIG. 7 is a flowchart of a communication method implemented at an encoding apparatus according to an embodiment of this application;

FIG. 8 is a flowchart of a communication method implemented at an encoding apparatus according to another embodiment of this application;

FIG. 9 is a flowchart of a communication method implemented at a decoding apparatus according to an embodiment of this application;

FIG. 10 is a flowchart of a communication method implemented at a decoding apparatus according to another embodiment of this application;

FIG. 11 is a simplified block diagram of an example device in a possible implementation according to an embodiment of this application;

FIG. 12 is a simplified block diagram of a communication apparatus in a possible implementation according to an embodiment of this application; and

FIG. 13 is a simplified block diagram of a network device in a possible implementation according to an embodiment of this application.

## DESCRIPTION OF EMBODIMENTS

To make the objectives, technical solutions, and advantages of this application clearer, the following further describes this application in detail with reference to the accompanying drawings. Specific operation methods, function descriptions, and the like in method embodiments may also be applied to apparatus embodiments or system embodiments.

As described above, a polar code (Polar code) is a first channel coding scheme that can "reach" a Shannon channel capacity, and has features such as good error correction performance and low decoding complexity. Hybrid automatic repeat request transmission is a general technology in wireless communication. The hybrid automatic repeat request (Hybrid Automatic Repeat Request, Hybrid ARQ) combines a forward error correction (Forward Error Correction, FEC) code and an automatic repeat request (ARQ) method, to significantly improve spectral efficiency. However, when the polar code is used as the FEC for the hybrid automatic repeat request, resource scheduling needs to be optimized.

In view of this, an embodiment disclosed in this application provides a communication method for interleaving. In the method, an encoding apparatus performs polar encoding on a first bit sequence during data retransmission, to obtain a second bit sequence. The encoding apparatus performs first interleaving based on the second bit sequence, to obtain a third bit sequence. The encoding apparatus outputs one or more bits in the third bit sequence, where the first bit sequence includes a part of information bits of an input bit sequence for initial data transmission, and the initial data transmission corresponds to the data retransmission. In this way, error correction performance during a small quantity of retransmissions and error correction performance during a large quantity of retransmissions can be balanced, and good error correction performance can be achieved under conditions of different amounts of retransmitted data.

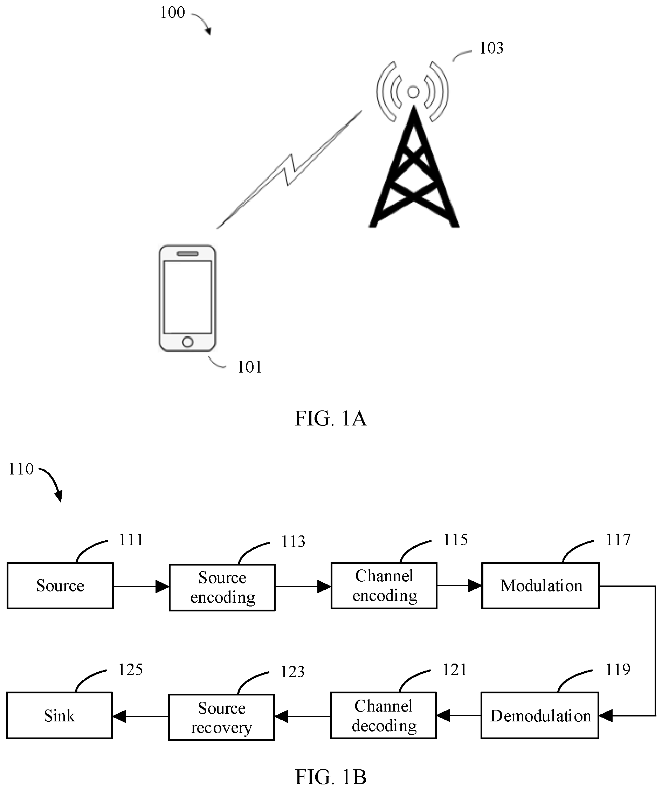

FIG. 1A shows a communication system in which embodiments of this application can be implemented. As shown in FIG. 1A, the communication methods provided in embodiments of this application may be applied to a wireless communication system 100. In the wireless communication system 100, a terminal device 101 and a network device 103 are shown. In the wireless communication system 100, a network device 103, for example, a base station (Base Station, BS), provides a communication service to a terminal device, for example, a mobile station (Mobile Station, MS). The base station includes a baseband unit (Baseband Unit, BBU) and a remote radio unit (Remote Radio Unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at a same rack.

The wireless communication system in embodiments of this application includes but is not limited to a narrow band-internet of things (Narrow Band-Internet of Things, NB-IoT) system, a global system for mobile communications (Global System for Mobile Communications, GSM), an enhanced data rate GSM evolution (Enhanced Data rate for GSM Evolution, EDGE) system, a wideband code division multiple access (Wideband Code Division Multiple Access, WCDMA) system, a code division multiple access 2000 system (Code Division Multiple Access 2000, CDMA2000), a time division-synchronization code division multiple access (Time Division-Synchronization Code Division Multiple Access, TD-SCDMA) system, a long term evolution (Long Term Evolution, LTE) system, and three application scenarios of a 5G mobile communication system: eMBB, URLLC, and eMTC.

It should be understood that the foregoing wireless communication system is applicable to a high-frequency scenario (above 6G), for example, a millimeter wave, and is also applicable to a low-frequency scenario (sub 6G). An application scenario of the wireless communication system includes but is not limited to an existing communication system, for example, a fifth generation (5G) system, a new radio (new radio, NR) communication system, or a future evolved public land mobile network (public land mobile network, PLMN) system.

The foregoing terminal device 101 may be user equipment (user equipment, UE), a terminal (terminal), an access terminal, a terminal unit, a terminal station, a mobile station (mobile station, MS), a remote station, a remote terminal, a mobile terminal (mobile terminal), a wireless communication device, a terminal agent, a terminal device, or the like. The terminal device 110 may alternatively be a communication chip having a communication module, or may be a vehicle having a communication function, or a vehicle-mounted device (for example, a vehicle-mounted communication apparatus or a vehicle-mounted communication chip), or the like. The terminal device 101 may have a wireless transceiver function. The terminal device can perform communication (for example, wireless communication) with one or more network devices in one or more communication systems, and accepts a network service provided by the network device. The network device herein includes but is not limited to the network device (103) shown in the figure.

The terminal device 101 may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, or another processing device connected to a wireless modem, a vehicle-mounted device, a wearable device, a terminal apparatus in a future 5G network, a terminal apparatus in a further evolved PLMN network, or the like.

The terminal device 101 may be specifically a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device 101 may be deployed on land, including an indoor terminal device or an outdoor terminal device, a handheld terminal device; or a vehicle-mounted terminal device; the terminal device 101 may be deployed on a water surface (for example, on a ship); or the terminal device 101 may be deployed in air (for example, on an airplane, a balloon, or a satellite). The network device (103) may be an access network device (also referred to as an access network site). The access network device is a device that provides a network access function, for example, a radio access network (radio access network, RAN) base station. The network device (103) may specifically include a base station (base station, BS), or include a base station, a radio resource management device configured to control the base station, and the like. The network device (103) may further include a relay station (relay device), an access point, a base station or an NR base station in a 5G network, a base station in a future evolved PLMN network, and the like. The network device (103) may be a wearable device or a vehicle-mounted device. Alternatively, the network device (103) may be a communication chip having a communication module.

For example, the network device (103) includes but is not limited to a base station (gNodeB, gNB) in 5G, an evolved NodeB (evolved NodeB, eNB) in a long term evolution (long term evolution, LTE) system, a radio network controller (radio network controller, RNC), a radio controller in a cloud radio access network (cloud radio access network, CRAN) system, a base station controller (base station controller, BSC), a home base station (for example, a home evolved NodeB, or a home NodeB, HNB), a baseband unit (baseband unit, BBU), a transmitting and receiving point (transmitting and receiving point, TRP), a transmitting point (transmitting point, TP), and a mobile switching center, or may be an evolved (evolutional) NodeB (eNB or eNodeB) in LTE, or may be a base station device in a future 5G network or an access network device in a future evolved PLMN, or may be a wearable device or a vehicle-mounted device.

In some deployments, the network device may include a central unit (central unit, CU) and a distributed unit (distributed unit, DU). The network device may further include an active antenna unit (active antenna unit, AAU). The CU implements some functions of the network device, and the DU implements some other functions of the network device. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. Network device examples include but are not limited to a NodeB (NodeB or NB), an evolved NodeB (eNodeB or eNB), a next-generation NodeB (gNB), a transmitting and receiving point (TRP), a remote radio unit (RRU), a radio head (RH), a remote radio head (RRH), an IAB node, and a low power node, for example, a femto node, a pico node, a reconfigurable intelligent surface (RIS), and a network-controlled repeater.

In addition, the network device (103) may be connected to a core network (core network, CN) device, and the core network device may be configured to provide a core network service for the access network device (103) and the terminal device (101). The core network device may correspond to different devices in different systems. For example, in 3G, the core network device may correspond to a serving general packet radio service (general packet radio service, GPRS) support node (serving GPRS support node, SGSN) and/or a gateway GPRS support node (gateway GPRS Support Node, GGSN). In 4G, the core network device may correspond to a mobility management entity (mobility management entity, MME) and/or a serving gateway (serving gateway, S-GW). In 5G, the core network device may correspond to an access and mobility management function (access and mobility management function, AMF), a session management function (session management function, SMF), or a user plane function (user plane function, UPF).

FIG. 1B is a block diagram of a communication system according to an embodiment of this application. In a communication system 110 shown in FIG. 1B, at a transmit end, after source encoding 113, channel encoding 115, and modulation 117 are performed on data of a source 111, a modulated signal is obtained and enters a channel. At a receive end, demodulation 119, channel decoding 121, and source recovery 123 are performed on a signal received from a channel, to obtain data of a sink 125. The data of the source 111 is recovered from the data of the sink 125 as much as possible. The source 111, the source encoding 113, the channel encoding 115, and the modulation 117 may be implemented in the terminal device 101 in FIG. 1A, and the demodulation 119, the channel decoding 121, the source recovery 123, and the sink 125 may be implemented in the network device 103. Alternatively, on the contrary, the source 111, the source encoding 113, the channel encoding 115, and the modulation 117 may be implemented in the network device 103 in FIG. 1A, and the demodulation 119, the channel decoding 121, the source recovery 123, and the sink 125 may be implemented in the terminal device 101. Refer to FIG. 1B. Improvements to the conventional technology in some embodiments of this application mainly relate to the channel encoding 115 and the channel decoding 121.

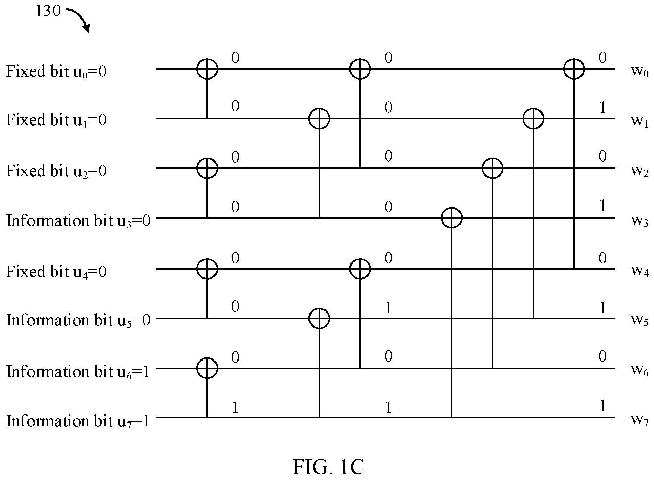

FIG. 1C is a diagram of polar encoding according to an embodiment of this application. A polar code (Polar code) is a first channel coding scheme that can be strictly proved to "reach" a Shannon channel capacity, has features such as good error correction performance and low decoding complexity, and currently has been determined by the 3rd generation partnership project (3rd Generation Partnership Project, 3GPP) as a control channel coding scheme for a 5G enhanced mobile broadband (Enhanced Mobile Broadband, eMBB) scenario.

FIG. 1C is a diagram of encoding of an $8 \times 8$ polar code with an 8-bit input and an 8-bit output, where $\oplus$ is a bitwise XOR operation. To-be-encoded bits on the left side of FIG. 1C are classified into two types: a frozen bit (frozen bit) and an information bit (data bit) according to an order of reliability of corresponding bit subchannels. A bit position with low reliability is set as the frozen bit, for example, may be set to 0, and is known to both an encoding apparatus and a decoding apparatus during actual transmission. A bit position with high reliability is set as the information bit, and is used to carry to-be-transmitted information. As shown in FIG. 1C, $u_7$, $u_6$, $u_5$, and $u_3$ are four bit positions with high reliability, and are set as information bits (data bits), and $u_4$, $u_2$, $u_1$, and $u_0$ are four bit positions with low reliability, and are set as frozen bits (frozen bits).

As a polar code is included in a 5G standard, research on decoding of the polar code becomes a hotspot of communication. Currently, mainstream polar code decoding methods may be classified into two types: sequential decoding and non-sequential decoding according to a decoding time sequence of the polar code. The sequential decoding means that a decoder performs decoding based on a natural time sequence designed for polarization. The non-sequential decoding means that a decoder concurrently outputs a decoding result based on another structure (for example, a Tanner graph or a Trellis graph) of the polar code. Currently, main polar-code-based sequential decoding algorithms include successive cancellation (SC) decoding, successive cancellation list (SCL) decoding, successive cancellation stack (SCS) decoding, CRC-aided successive cancellation list (CA-SCL) decoding, and the like. The non-sequential decoding method mainly includes belief propagation (BP) decoding, and the like. In terms of decoding performance, SC decoding is the worst. The SCL decoding is greatly improved compared with the SC decoding, and the CA-SCL obtained by combining the CRC check and the SCL decoding can make performance of the polar code better than that of an LDPC code and that of a turbo code. Therefore, currently, the SCL decoding and the CA-SCL decoding are mainly used in an actual system.

The polar code may be used for hybrid automatic repeat request (HARQ) transmission, for example, an incremental redundancy hybrid automatic repeat request (incremental redundancy hybrid ARQ, IR-HARQ), while in HARQ, the polar code is self-decodable.

The HARQ combines a forward error correction (FEC) code and an automatic repeat request (ARQ) combination method, to significantly improve spectral efficiency. A basic operating process is as follows: First, the encoding apparatus sends a symbol sequence corresponding to an encoded packet as initial transmission. The decoding apparatus receives the symbol sequence and attempts to perform decoding. If the decoding apparatus performs decoding successfully, the decoding apparatus feeds back an ACK. The encoding apparatus stops sending based on the ACK feedback information. If the decoding apparatus fails to perform decoding, the decoding apparatus buffers the received symbol sequence or demodulation soft information corresponding to the symbol sequence, and feeds back a NACK or performs no feedback. If the encoding apparatus receives the NACK or receives no ACK, the encoding apparatus continues to send a re-encoded bit sequence as incremental redundancy (IR). A decoder side performs joint decoding based on the twice-received symbol sequences. Compared with sending of all data that is sent for a plurality of times during HARQ transmission at one time, during transmission, the HARQ allows the encoding apparatus to stop sending when the decoding apparatus successfully performs decoding, thereby improving system throughput. If the initial transmission succeeds, that is, the encoding apparatus does not need to perform resending, spectrum resources are saved, and spectral efficiency is improved. If the initial transmission fails, the decoding apparatus performs joint decoding on the twice-received data, and error correction performance of a long code can still be achieved.

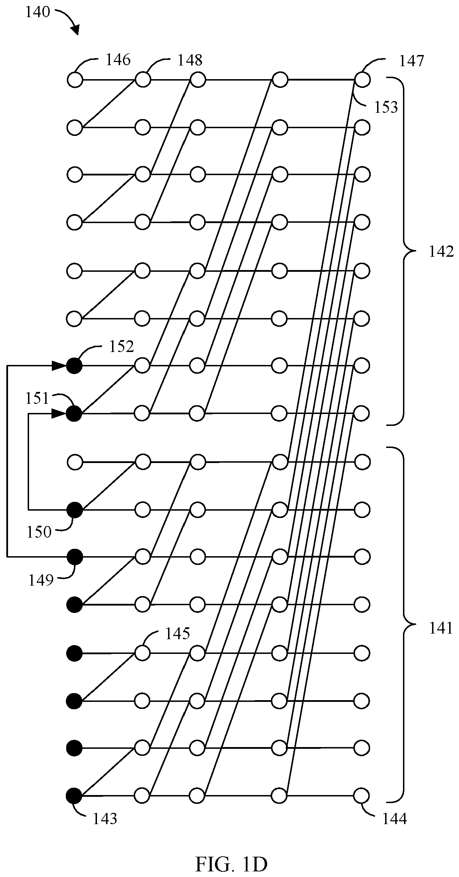

FIG. 1D is a diagram of IR-HARQ of a polar code according to an embodiment of this application. In a diagram 140, 141 is an initial transmission polar code whose length is 8 or a U code. 142 is a retransmission polar code whose length is 8, or a V code. An encoded bit sequence for initial transmission, for example, 144 is obtained after initial transmission polar encoding is performed on an input bit sequence for initial data transmission, for example, 143. In the input bit sequence for the initial data transmission, for example, 143, a solid point represents an information bit, and a hollow point represents a frozen bit. In the initial transmission polar code 141, in middle columns other than the input bit sequence for the initial transmission and the encoded bit sequence for the initial transmission, a point having two inputs of, for example, 145 represents a bitwise XOR operation. An encoded bit sequence for retransmission, for example, 147 is obtained after retransmission polar code encoding or V code encoding is performed on an input bit sequence for data retransmission, for example, 146. In the input bit sequence for the data retransmission, for example, 146, a solid point represents an information bit, and a hollow point represents a frozen bit. In addition, in the input bit sequence for the data retransmission, an information bit 152 is obtained by copying an information bit 149 in the initial transmission polar code, and is a same information bit. An information bit 151 is obtained by copying an information bit 150 in the initial transmission polar code, and is a same information bit. In the retransmission polar code 142, in middle columns other than the input bit sequence for the retransmission and the encoded bit sequence for the retransmission, a point having two inputs of, for example, 148 represents a bitwise XOR operation. There is further a connection line, for example, 153 between the retransmission polar code 142 and the initial transmission polar code 141, to completely introduce information in the initial transmission polar code 141 into the retransmission polar code 142.

During decoding, if the initial transmission polar code 141 is independently decoded, 149 and 150 are information bits. If the initial transmission polar code 141 and the retransmission polar code 142 are jointly decoded, the initial transmission polar code 141 and the retransmission polar code 142 may be combined into a polar code whose length is 16. 151 and 152 are information bits. When 149 and 150 are decoded, results are obtained by using 151 and 152 same as 149 and 150. Therefore, 149 and 150 become known values, and may be understood as dynamic frozen bits.

This framework is used, so that regardless of whether the initial transmission polar code 141 is independently decoded or the initial transmission polar code 141 and the retransmission polar code 142 are jointly decoded, the information bit is always carried at a high-reliability location, to ensure optimal decoding performance. It is understood from a perspective of bit rate allocation that the foregoing one-to-one mapping relationship is equivalent to that the information bit in the initial transmission polar code 141 is "moved" to the retransmission polar code 142, to implement optimal bit rate allocation between the initial transmission polar code 141 and the retransmission polar code 142.

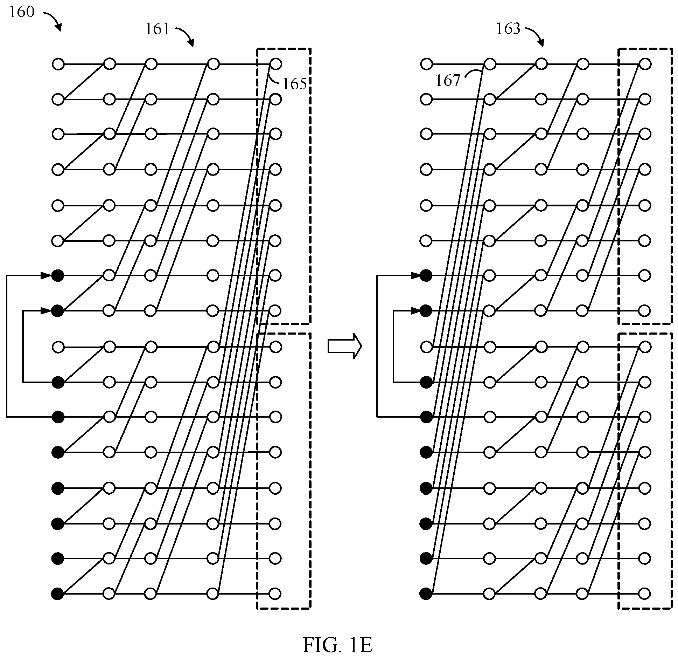

FIG. 1E is a diagram of a self-decodable polar code according to an embodiment of this application.

Direct sending of a plurality of redundancy versions (Redundancy Versions, RVs) is a coverage enhancement method in wireless communication. Each RV may be one code, and may have the following features: Each RV supports independent decoding, and a plurality of RV versions may be combined as a long code to implement enhanced decoding. Compared with independent sending of one long code, multi-RV transmission allows a receive end to still have a capability of performing decoding based on a remaining RV when one RV is completely lost, but the receive end does not have this capability when one long code is directly sent.

A polar code may be self-decodable, as shown in FIG. 1E. In a diagram 160, the left side 161 shows a fence diagram of a common polar code. A right side fence diagram 163 may be obtained by converting inter-stage interleaving 165 for an initial transmission polar code and a retransmission polar code into 167 on the right side 163. It can be learned that, when there is a one-to-one mapping relationship between the initial transmission polar code and the retransmission polar code, complete information of an information bit included in the initial transmission polar code or the retransmission polar code is separately received. In this way, when a channel condition is good, a decoder may perform decoding based on the initial transmission polar code or the retransmission polar code.

It can be learned from the foregoing analysis that, for the polar code, regardless of whether it is IR-HARQ or a self-decodable scheme, a feature of a one-to-one mapping relationship between an information bit in the retransmission polar code and a part of information bits in the initial transmission polar code needs to be used. From a perspective of bit mapping, when equivalent long code bit mapping is constructed, a part of information bits needs to be mapped to both the initial transmission polar code and the retransmission polar code.

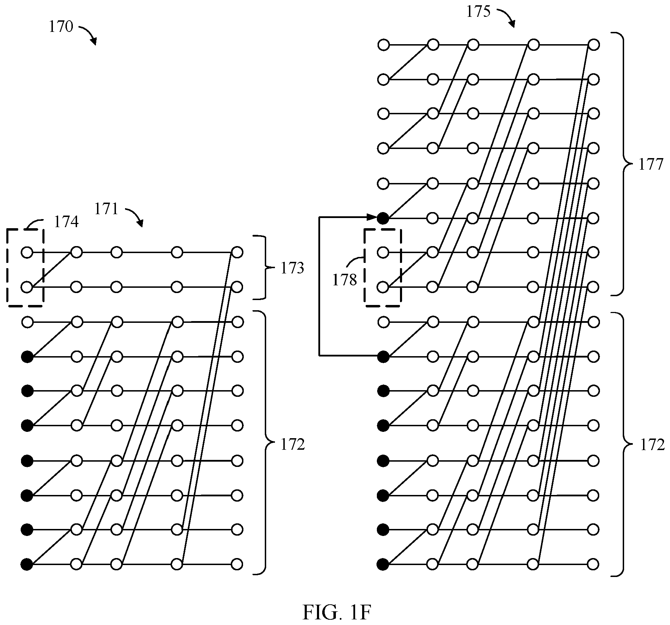

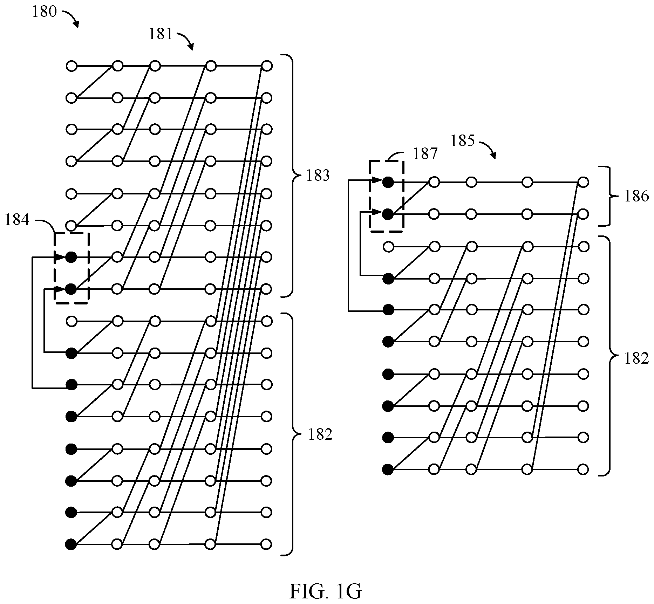

In an actual wireless communication scenario, there is a problem that a radio resource scheduled for HARQ retransmission adapts to an encoder structure. When a HARQ transmission mechanism is implemented in wireless communication, a retransmission resource is determined through system scheduling, and may be few or many, and coding preferably supports rateless (Rateless) transmission. That is, coding is supported to be completed in advance, and then a corresponding quantity of codeword bits is extracted from an encoded bit sequence based on a quantity of retransmission resources for sending. In other words, for "rateless", a bit rate is not determined in advance, but is determined after a resource is given. Rateless transmission requires that performance is always close to optimal performance regardless of a quantity of codeword bits to be sent. For the polar code, the following two requirements are proposed: Regardless of the quantity of codeword bits to be sent, the information bit is always on a high-reliability channel; and an optimal polar code during a small quantity of retransmissions is a subcode of an optimal polar code during a large quantity of retransmissions. However, as "codeword bits" increase, reliability of subchannels and an order of the reliability of the subchannels change, and a design of the polar code may not meet the foregoing requirement. When a length M of the retransmission polar code is equal to 8, a 7th bit and an 8th bit are set as information bits. However, when the length M of the retransmission polar code is equal to 2, the two bits need to be set to frozen bits. Regardless of whether polar code construction is performed based on M=2 or M=8, transmission performance in a scenario in which a scheduled resource is not adapted is affected. Details are shown in FIG. 1F and FIG. 1G.

In an embodiment 170 in FIG. 1F, if a mapping relationship is constructed based on a retransmission length M=2, in a code structure 171, 172 is an initial transmission polar code, 173 is a retransmission polar code, and a retransmission length M of 173 is equal to 2. In a block 174, frozen bits are configured due to insufficient capacity. However, during actual data transmission, if a large quantity of retransmission resources are scheduled for the retransmission polar code, for example, an actual retransmission length M is equal to 8, an actually used polar code is constructed based on 175, where 172 is an initial transmission polar code, and 177 is a retransmission polar code. After a length of the retransmission polar code 177 is increased, reliability in a block 178 is improved, but frozen bits are still configured. This is equivalent to a waste of a high-reliability subchannel, and performance is reduced.

An embodiment 170 of FIG. 1G is opposite to that of FIG. 1F. If a mapping relationship is constructed based on a retransmission length M=8, in a code structure 181, 182 is an initial transmission polar code, 183 is a retransmission polar code, and a retransmission length M of 183 is equal to 8. Reliability in a block 184 is high, and information bits are configured. However, during actual data transmission, if a small quantity of retransmission resources are scheduled for the retransmission polar code, for example, an actual retransmission length M is equal to 2, an actually used polar code is constructed based on 185, where 182 is an initial transmission polar code, and 186 is a retransmission polar code. After a length of the retransmission polar code 186 is reduced, reliability in a block 187 is reduced. In this case, the information bit is placed at an extremely unreliable location, and a system bad point is formed.

In an incremental redundancy hybrid automatic repeat request (Incremental Redundancy Hybrid ARQ, IR-HARQ) solution, an initial transmission polar code is usually first transmitted, and then a retransmission polar code is transmitted from bottom to top. As shown in FIG. 1F and FIG. 1G, it is difficult to balance performance during a small quantity of retransmissions and performance during a large quantity of retransmissions, and flexibility of the IR-HARQ of a polar code is limited. Therefore, optimization needs to be performed.

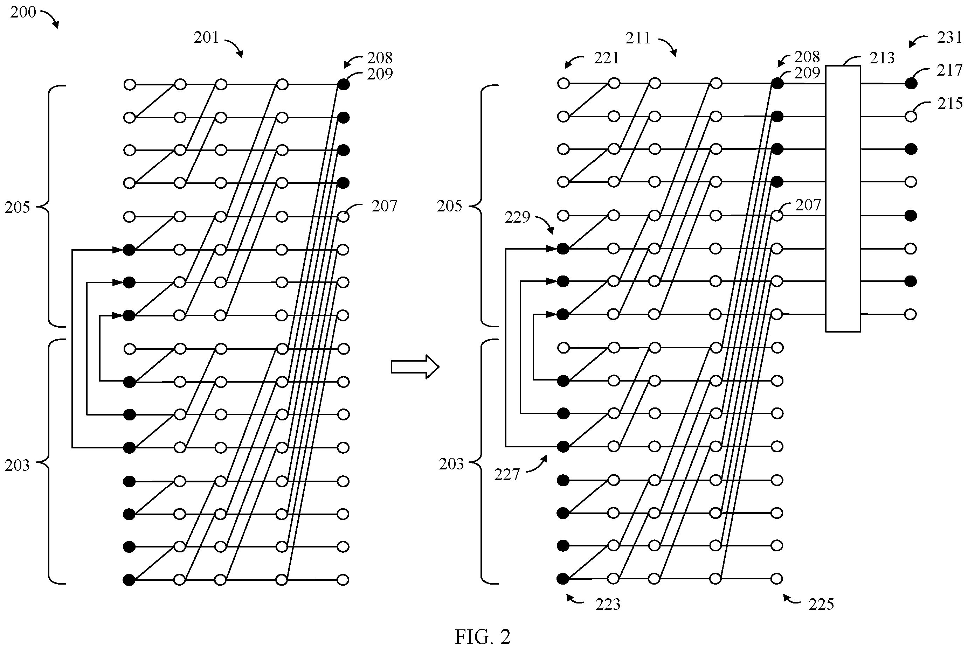

In this embodiment of this application, to resolve a problem that flexibility of the IR-HARQ of the polar code is limited because it is difficult to balance performance during a small quantity of retransmissions and performance during a large quantity of retransmissions, and another potential problem in the conventional solution, a solution in which interleaving is used after retransmission polar encoding is proposed, as shown in FIG. 2. In 201 on the left side of FIG. 2, an order of output bits 208 of a retransmission polar code is represented by a hollow point, for example, 207, and a solid point, for example, 209. However, in 211 on the right side, first interleaving 213 is used after the retransmission polar encoding, and an order of a bit sequence 231 obtained after the first interleaving is different from an order of an output bit sequence 208 of the retransmission polar code. In the bit sequence 231 obtained after the first interleaving, 215 corresponds to 207, and 217 corresponds to 209. The first interleaving 213 is used to send data in a low bit rate retransmission polar code in advance, without using a method of rigidly reducing a bit rate, so that performance during a small quantity of retransmissions can be improved without sacrificing performance during a large quantity of retransmissions, thereby resolving the foregoing dilemma.

In this embodiment of this application, according to the solution 211 on the right side of FIG. 2, 203 is an initial transmission polar code, 205 is a retransmission polar code, and the initial transmission polar code 203 corresponds to the retransmission polar code 205. The retransmission polar code 205 is a first polar code, and the initial transmission polar code 203 is a second polar code. 223 is an input bit sequence for initial data transmission, where a solid point is an information bit, and a hollow point is a frozen bit. 225 is an output bit sequence of the initial transmission polar code, that is, a sixth bit sequence. 221 is an input bit sequence of the retransmission polar code, that is, a first bit sequence, where a solid point is an information bit, and a hollow point is a frozen bit. 208, that is, the second bit sequence, is obtained by performing an exclusive OR operation on the output bit sequence of the retransmission polar code and the sixth bit sequence. The first bit sequence 221 includes 229, which corresponds to a part of information bits 227 of the input bit sequence 223 for the initial data transmission.

An encoding apparatus performs polar encoding 205 on the first bit sequence 221, that is, an input sequence 221 of the retransmission polar code during data retransmission, to obtain the second bit sequence 208, that is, an output bit sequence 208 of the retransmission polar code. The first interleaving 213 is performed based on the second bit sequence 208, to obtain a third bit sequence 231. The first interleaving 213 may be directly performed on the second bit sequence 208, or may be performed after other processing is performed on the second bit sequence 208, for example, after rate matching (rate matching) is performed. The encoding apparatus may output one or more bits in the third bit sequence 231. A quantity of the one or more bits in the third bit sequence 231 output by the encoding apparatus may be determined based on a resource scheduled to convey the first bit sequence 221. In this way, flexible adaptation to a scheduled resource can be implemented, and a conflict between a code structure and a random retransmission resource can be resolved during data retransmission, thereby implementing performance optimization.

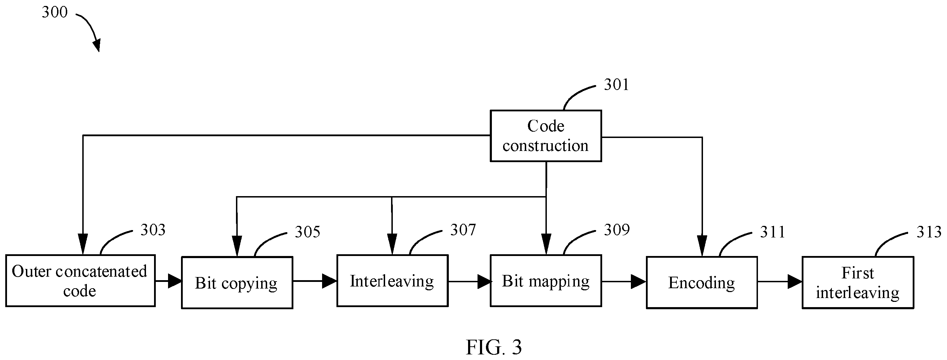

FIG. 3 is a diagram of a structure of an encoder side according to an embodiment of this application. A structure 300 of the encoder side may include a part or all of the following steps: code construction 301, outer concatenated code 303, bit copying 305, interleaving 307, bit mapping 309, encoding 311, and first interleaving 313. The encoding 311 corresponds to the initial transmission polar code 203 and the retransmission polar code 205 in FIG. 2, and the first interleaving 313 corresponds to the first interleaving 213 after the retransmission polar encoding 205 in FIG. 2.

In this embodiment of this application, specific implementations of the polar encoding and the first interleaving are as follows.

First, an encoding parameter is obtained. A to-be-encoded information bit sequence $\overline{S}$ is obtained, where a length of $\overline{S}$ is K, and a length of an output encoded bit is $N_1$. For example, K may include a sum of a quantity of information bits and a quantity of cyclic redundancy check CRC bits.

Then, code construction is performed, which corresponds to the code construction 301 in FIG. 3, and an information bit set is determined based on a reliability sequence. K locations are selected as an information bit set $\left|\overline{Q}_{I_2}^{N_2}\right|$ based on a polar code sequence whose length is $N_2$. K locations are selected as an information bit set $\left|\overline{Q}_{I_1}^{N_1}\right|$ based on a polar code sequence whose length is $N_1$. Based on $\overline{Q}_{I_2}^{N_2}$ and $\overline{Q}_{I_1}^{N_1}$, sets $\overline{Q}_{cp}^{u}$ and $\overline{Q}_{cp}^{v}$ are further determined. $\overline{Q}_{cp}^{u}$ and $\overline{Q}_{cp}^{v}$ respectively indicate information bit subsets that form a one-to-one mapping relationship and that are in the initial transmission polar code and the retransmission polar code. $\overline{Q}_{cp}^{u}$ corresponds to 227 in FIG. 2, and $\overline{Q}_{cp}^{v}$ corresponds to 229. A process of determining $\overline{Q}_{I_1}^{N_1}$ and $\overline{Q}_{I_2}^{N_2}$ may be consistent with a conventional method, that is, a most reliable location is selected according to a sequence of corresponding lengths. Details are not described herein. $\overline{Q}_{cp}^{v}$ is a subset of elements whose lengths less than $N_1$ in $\overline{Q}_{I_2}^{N_2}$, and $\overline{Q}_{cp}^{u}$ is a set $\overline{Q}_{I_1}^{N_2} - \overline{Q}_{I_2}^{N_2}$. An element in $\overline{Q}_{I_1}^{N_2}$ one-to-one corresponds to an element j in $\overline{Q}_{I_1}^{N_1}$. A specific implementation method is $i = j + N_1$. $N_2 = 2N_1$, and the polar code sequence whose length is $N_1$ is a subsequence of the polar code sequence whose length is $N_2$. To be specific, N1 is a length of the output bit sequence 225 of the initial transmission polar code 203 or a length of the output bit sequence 208 of the retransmission polar code 205, and N2 is a sum of a length of the output bit sequence 225 of the initial transmission polar code and a length of the output bit sequence 208 of the retransmission polar code.

Then, bit mapping and encoding are performed, which correspond to the bit mapping 309 and the encoding 311 in FIG. 3, to construct an encoded bit sequence $\overline{X_2}$ whose length is $N_1$, which corresponds to the output bit sequence 208 of the retransmission polar code in FIG. 2.

A value corresponding to $\overline{Q}_{cp}^{u}$ (corresponding to 227 in FIG. 2) in $\overline{U_1}$ is extracted, and after interleaving (corresponding to the interleaving 307 in FIG. 3), is placed in an information bit corresponding to $\overline{Q}_{cp}^{v}$ (corresponding to 229 in FIG. 2) in $\overline{U_2}$, and a remaining location is 0. Exclusive OR is performed on $\overline{U_2}$ and $\overline{U_1}$, and then is multiplied by an encoding matrix of the polar code, to obtain an encoded bit vector $\overline{X_2}$, that is, the output bit sequence 208 of the retransmission polar code in FIG. 2. $\overline{U_1}$ and $\overline{U_2}$ are respectively the first bit sequence 221 and the input bit sequence 223 for the initial data transmission. In this embodiment of this application, the foregoing may also be used to directly obtain a self-decodable long code, and construct a bit vector $\overline{U_2}$ whose length is $N_2$. A

frozen bit is set to 0, and an information bit is carried in an information bit position, where a same information bit is placed in a one-to-one mapping bit. $\overline{U_2}$ is multiplied by the encoding matrix of the polar code, to obtain the encoded bit vector.

Finally, the first interleaving 313 in FIG. 3 is performed. The first interleaving 213 is performed on the encoded bit sequence $\overline{X_2}$, that is, the second bit sequence 208 in FIG. 2, to obtain a third bit sequence 231, and then M bits are sequentially selected in order from the third bit sequence 231 from back to front for sending. M is determined by a scheduled retransmission resource.

In this embodiment of this application, a specific implementation of the first interleaving 313 may be subblock interleaving, to simplify interleaving implementation and obtain good performance. Then, M bits are selected in order from back to front for sending. In this embodiment of this application, the second bit sequence 208 may be divided into 32 subblocks, and an order of the subblocks before interleaving is 0 to 31. An order of the interleaved subblocks may be [0, 1, 2, 4, 3, 5, 6, 7, 8, 16, 9, 17, 10, 18, 11, 19, 12, 20, 13, 21, 14, 22, 15, 23, 24, 25, 26, 28, 27, 29, 30, 31], to be compatible with NR; or [0, 4, 8, 12, 1, 5, 11, 13, 2, 6, 10, 14, 3, 7, 11, 15, 16, 20, 24, 28, 17, 21, 25, 29, 18, 22, 26, 30, 19, 23, 27, 31], to obtain excellent performance; or [0, 8, 16, 24, 1, 9, 17, 25, 2, 10, 18, 26, 3, 11, 19, 27, 4, 12, 20, 28, 5, 13, 21, 29, 6, 14, 22, 30, 7, 15, 23, 31], to reduce complexity.

A person of ordinary skill in the art may understand that an input order of the subblocks before interleaving may alternatively be 1 to 32. Correspondingly, an order of the interleaved subblocks is [1, 2, 3, 5, 4, 6, 7, 8, 9, 17, 10, 18, 11, 19, 12, 20, 13, 21, 14, 22, 15, 23, 16, 24, 25, 26, 27, 29, 28, 30, 31, 32], [1, 5, 9, 13, 2, 6, 10, 14, 3, 7, 11, 15, 4, 8, 12, 16, 17, 21, 25, 29, 18, 22, 26, 30, 19, 23, 27, 31, 20, 24, 28, 32], or [1, 9, 17, 25, 2, 10, 18, 26, 3, 11, 19, 27, 4, 12, 20, 28, 5, 13, 21, 29, 6, 14, 22, 30, 7, 15, 23, 31, 8, 16, 24, 32].

A person of ordinary skill in the art may understand that the first interleaving 313 may also be bit interleaving, to implement finer interleaving. The first interleaving 313 may alternatively be at least one of random interleaving, triangular interleaving, row-column interleaving, or reverse interleaving, to implement flexible interleaving.

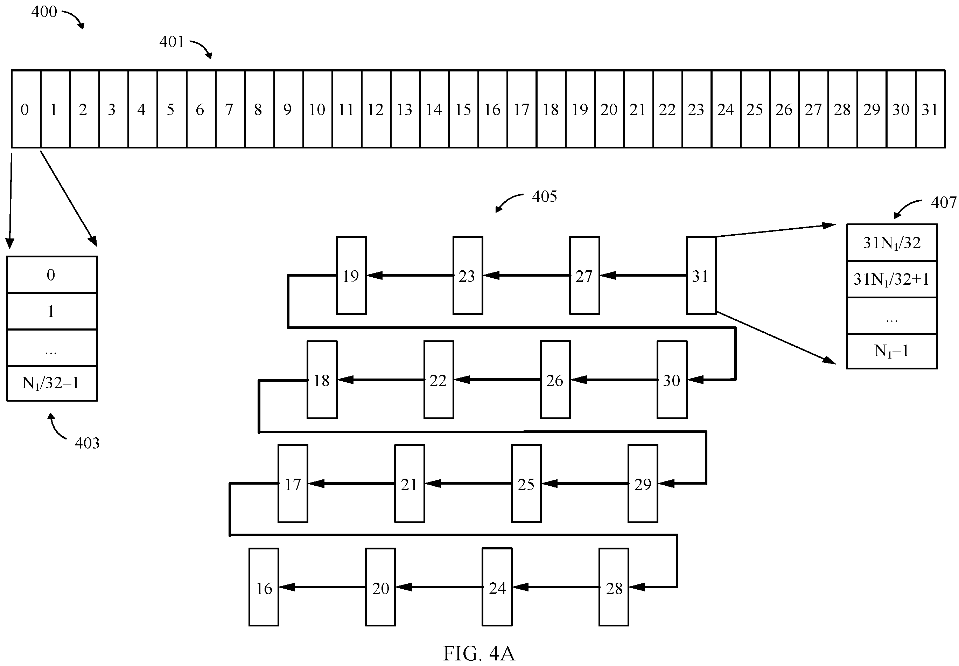

FIG. 4A is a diagram of subblock interleaving according to an embodiment of this application. Specifically, FIG. 4A shows an implementation of an order of interleaved subblocks [0, 4, 8, 12, 1, 5, 11, 13, 2, 6, 10, 14, 3, 7, 11, 15, 16, 20, 24, 28, 17, 21, 25, 29, 18, 22, 26, 30, 19, 23, 27, 31].

In an embodiment 400, an input sequence 401 of first interleaving is divided into 32 subblocks, that is, subblocks 0 to 31. The sequence 401 is an implementation of the output bit sequence of the retransmission polar code or the second bit sequence 208 in FIG. 2. A total bit length of the sequence 401 is $N_1$, and bits 0, 1, ..., and $N_1/32-1$ are in the subblock 0. A sequence 405 is an output sequence of subblock interleaving, and an output order of the subblocks is 31, 27, 23, 19, 30, 26, 22, 18, 29, 25, 21, 17, 28, 24, 20, 16, and the like. Bits $31N_1/32$, $31N_1/32+1$, ..., and $N_1-1$ are in the subblock 31. In the subblock interleaving manner shown in FIG. 4A, performance during a small quantity of retransmissions and performance during a large quantity of retransmissions can be balanced, and flexibility of IR-HARQ of a polar code can be improved.

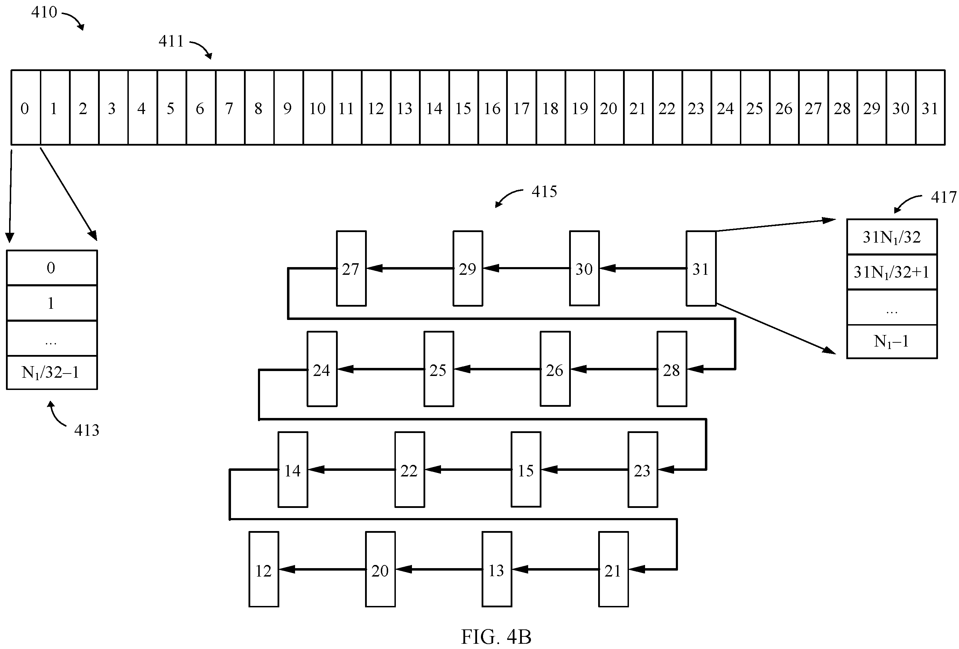

FIG. 4B is a diagram of subblock interleaving according to an embodiment of this application. Specifically, FIG. 4B shows an implementation of an order of interleaved subblocks [0, 1, 2, 4, 3, 5, 6, 7, 8, 16, 9, 17, 10, 18, 11, 19, 12, 20, 13, 21, 14, 22, 15, 23, 24, 25, 26, 28, 27, 29, 30, 31].

In an embodiment 400, an input sequence 411 of first interleaving is divided into 32 subblocks, that is, subblocks 0 to 31. The sequence 411 is an implementation of the output bit sequence of the retransmission polar code or the second bit sequence 208 in FIG. 2. A total bit length of the sequence 411 is $N_1$, and bits 0, 1, ..., and $N_1/32-1$ are in the subblock 0. A sequence 415 is an output sequence of subblock interleaving, and an output order of the subblocks is 31, 30, 29, 27, 28, 26, 25, 24, 23, 15, 22, 14, 21, 13, 20, 12, and the like. Bits $31N_1/32$, $31N_1/32+1$, ..., and $N_1-1$ are in the subblock 31. In the subblock interleaving manner shown in FIG. 4B, performance during a small quantity of retransmissions and performance during a large quantity of retransmissions can be balanced, and flexibility of IR-HARQ of a polar code can be improved.

A person of ordinary skill in the art may understand that, for an order of interleaved subblocks [0, 8, 16, 24, 1, 9, 17, 25, 2, 10, 18, 26, 3, 11, 19, 27, 4, 12, 20, 28, 5, 13, 21, 29, 6, 14, 22, 30, 7, 15, 23, 31], a specific implementation is similar to that in FIG. 4A and FIG. 4B. Details are not described herein again in this application.

In this embodiment of this application, the polar encoding and the first interleaving may alternatively be implemented in the following manner. When the first interleaving is constructed only according to the embodiment shown in FIG. 4A, a granularity of a quantity E of retransmission resources of the polar code is limited by a size of the subblock. For example, for the interleaving sequence [0, 4, 8, 12, 1, 5, 11, 13, 2, 6, 10, 14, 3, 7, 11, 15, 16, 20, 24, 28, 17, 21, 25, 29, 18, 22, 26, 30, 19, 23, 27, 31], it may be required that performance stability can be ensured only when a quantity of retransmission resources is an integer multiple of a length of four subblocks (that is, a quantity of bits included in four word blocks), that is, the four subblocks are used as one subblock group. If this condition is not met, a bad point still occurs. In some embodiments of this application, for this problem and another potential problem, a solution based on partial subblock interleaving is provided.

First, an encoding parameter is obtained. A to-be-encoded information bit sequence $\overline{S}$ is obtained, where a length of $\overline{S}$ is K, and a length of an output encoded bit is $N_1$. K may include a sum of a quantity of information bits and a quantity of CRC bits.

Then, code construction is performed, which corresponds to the code construction 301 in FIG. 3, and an information bit set is determined based on a reliability sequence. K locations are selected as an information bit set $\left|\overline{Q}_{I_2}^{N_2}\right|$ based on a polar code sequence whose length is $N_2$. K locations are selected as an information bit set $\left|\overline{Q}_{I_1}^{N_1}\right|$ based on a polar code sequence whose length is $N_1$. Based on $\overline{Q}_{I_2}^{N_2}$ and $\overline{Q}_{I_1}^{N_1}$, sets $\overline{Q}_{cp}^{u}$ and $\overline{Q}_{cp}^{v}$ are further determined. $\overline{Q}_{cp}^{u}$ and $\overline{Q}_{cp}^{v}$ respectively indicate information bit subsets that form a one-to-one mapping relationship and that are in the initial transmission polar code and the retransmission polar code. $\overline{Q}_{cp}^{u}$ corresponds to 227 in FIG. 2, and $\overline{Q}_{cp}^{v}$ corresponds to 229. A process of determining $\overline{Q}_{I_1}^{N_1}$ and $\overline{Q}_{I_2}^{N_2}$ is consistent with a conventional method, that is, a most reliable location is selected according to a sequence of corresponding lengths. Details are not described herein. $\overline{Q}_{cp}^{v}$ is a subset of elements whose lengths less than $N_1$ in $\overline{Q}_{I_2}^{N_2}$, and $\overline{Q}_{cp}^{u}$ is a set $\overline{Q}_{I_1}^{N_2} - \overline{Q}_{I_2}^{N_2}$. An element in $\overline{Q}_{I_1}^{N_2}$ one-to-one corresponds to an element j in $\overline{Q}_{I_1}^{N_1}$. A specific implementation method is $i = j + N_1$. $N_2 = 2N_1$, and the polar code sequence whose length is $N_1$ is a subsequence of the polar code sequence whose length is $N_2$. To be specific, N1 is a length of the output bit sequence 225 of the initial transmission polar code 203 or a length of the output bit sequence 208 of the retransmission polar code 205, and N2 is a sum of a length of the output bit sequence 225 of the initial transmission polar code and a length of the output bit sequence 208 of the retransmission polar code.

Then, bit mapping and encoding are performed, which correspond to the bit mapping 309 and the encoding 311 in FIG. 3, to construct an encoded bit sequence $\overline{X_2}$ whose length is $N_1$, which corresponds to the output bit sequence 208 of the retransmission polar code in FIG. 2. A value corresponding to $\overline{Q}_{cp}^{u}$ (corresponding to 227 in FIG. 2) in $\overline{U_1}$ is extracted, and after interleaving (corresponding to the interleaving 307 in FIG. 3), is placed in an information bit corresponding to $\overline{Q}_{cp}^{v}$ (corresponding to 229 in FIG. 2) in $\overline{U_2}$, and a remaining location is 0. Exclusive OR is performed on $\overline{U_2}$ and $\overline{U_1}$, and then is multiplied by an encoding matrix of the polar code, to obtain an encoded bit vector $\overline{X_2}$, that is, the output bit sequence 208 of the retransmission polar code in FIG. 2. $\overline{U_1}$ and $\overline{U_2}$ are respectively the first bit sequence 221 and the input bit sequence 223 for the initial data transmission.

In this embodiment of this application, the foregoing may also be used to directly obtain a self-decodable long code, and construct a bit vector $\overline{U_2}$ whose length is $N_2$. A frozen bit is set to 0, and an information bit is carried in an information bit position, where a same information bit is placed in a one-to-one mapping bit. $\overline{U_2}$ is multiplied by the encoding matrix of the polar code, to obtain the encoded bit vector.

Finally, the first interleaving 313 in FIG. 3 is performed. The interleaving is performed on the encoded bit sequence $\overline{X_3}$, that is, the second bit sequence 208 in FIG. 2, to obtain a third bit sequence 231, and then M bits are sequentially selected in order from the third bit sequence 231 from back to front for sending. M is determined by a scheduled retransmission resource. The third bit sequence 231 is also denoted as a bit sequence S.

For the first interleaving 313, the subblock interleaving manner may be used, and an output subblock sequence obtained through subblock interleaving is [0, 4, 8, 12, 1, 5, 11, 13, 2, 6, 10, 14, 3, 7, 11, 15, 16, 20, 24, 28, 17, 21, 25, 29, 18, 22, 26, 30, 19, 23, 27, 31]. A length of each subblock is $L=N_1/32$, where $N_1$ is a length of an encoded sequence of a retransmission polar code or a V code. After the interleaving, Z consecutive subblocks are used as one subblock group, and a length of each subblock group is LZ. A value of L may be one of 2, 4, and 8, or another value, to implement flexible subblock division.

When a specific sent bit is selected, complete $\lfloor E/(LZ) \rfloor$ subblock groups are first selected from back to front to obtain $EO = LZ * \lfloor M/(LZ) \rfloor$ bits, to be used as a fourth bit sequence or a sequence S1. $\lfloor \; \rfloor$ is a rounding down operation. In an embodiment, Z=4. Second interleaving, for example, row-column interleaving, is performed on a next subblock group (a total of LZ bits) after the complete $\lfloor M/(LZ) \rfloor$ subblock groups, to obtain a bit sequence obtained through the second interleaving. E-E0 bits are read from the bit sequence obtained through the second interleaving from back to front as a fifth bit sequence or a sequence S2. The sequence S1 and the sequence S2 are used as bit sequences for sending. That is, the one or more bits to be output in the third bit sequence 231 are obtained by combining the fourth bit sequence and the fifth bit sequence. When E is an integer multiple of the length LZ of the subblock group, S2 is a null set, and the second interleaving is not performed. In this way, a retransmission granularity supported by rateless polar coding can be improved, and flexibility of a system design can be improved.

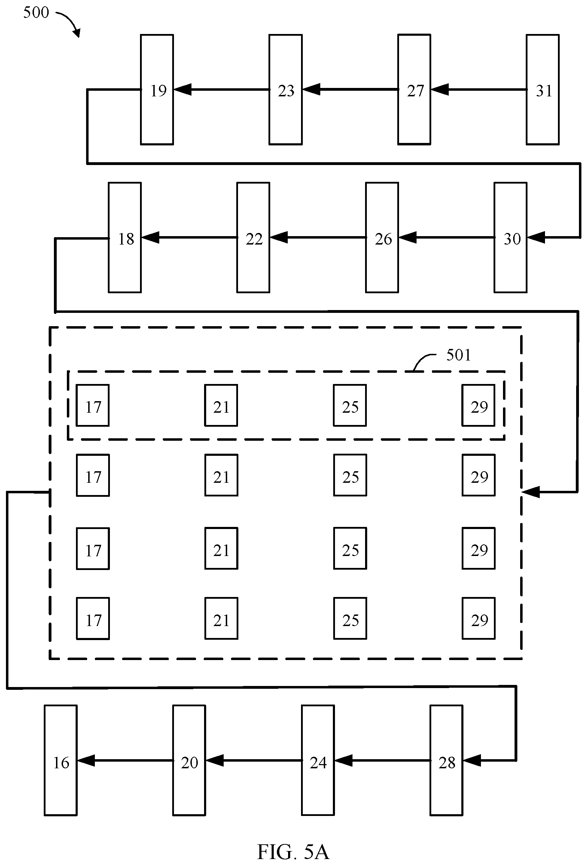

FIG. 5A is a diagram of subblock group partial interleaving according to an embodiment of this application. In FIG. 5A, Z=4 subblocks are used as one subblock group. A length of scheduled transmission data is nine subblocks. Therefore, two complete subblock groups, that is, subblocks 31, 27, 23, 19, 30, 26, 22, and 18, may be transmitted, to be used as a fourth bit sequence or a sequence S1. Then, data of one subblock, less than one subblock group, may be further transmitted. Therefore, second interleaving may be performed on data in a next subblock group, that is, subblocks 29, 25, 21, and 17, and a sequence 501 of one subblock length is extracted, to be used as a fifth bit sequence or a sequence S2. The sequence 501 includes a part of data in the subblocks 29, 25, 21, and 17, so that a retransmission granularity supported by rateless polar coding can be improved, flexibility of a system design can be improved, and better performance can be obtained.

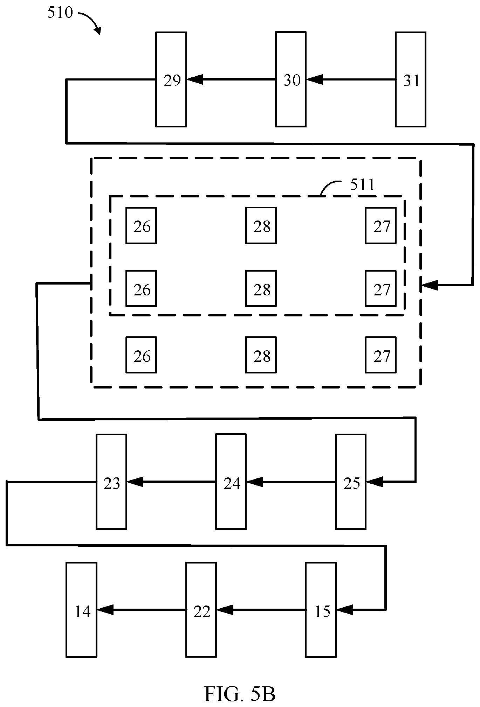

FIG. 5B is a diagram of subblock group partial interleaving according to another embodiment of this application. A subblock interleaving order is [0, 1, 2, 4, 3, 5, 6, 7, 8, 16, 9, 17, 10, 18, 11, 19, 12, 20, 13, 21, 14, 22, 15, 23, 24, 25, 26, 28, 27, 29, 30, 31]. In FIG. 5B, Z=3 subblocks are used as one subblock group. A length of scheduled transmission data is five subblocks. Therefore, one complete subblock group that is, subblocks 31, 30, and 29, may be transmitted, to be used as a fourth bit sequence or a sequence S1. Then, data of two subblocks, less than one subblock group, may be further transmitted. Therefore, second interleaving may be performed on data in a next subblock group, that is, subblocks 27, 28, and 26, and a sequence 511 of two subblock lengths is extracted, to be used as a fifth bit sequence or a sequence S2. The sequence 511 includes a part of data in the subblocks 27, 28, and 26, so that a retransmission granularity supported by rateless polar coding can be improved, flexibility of a system design can be improved, and better performance can be obtained.

The second interleaving may be row-column interleaving, random interleaving, triangular interleaving, reverse interleaving, or another interleaving manner. This is not limited in this disclosure.

A person of ordinary skill in the art may understand that, for a subblock interleaving order [0, 8, 16, 24, 1, 9, 17, 25, 2, 10, 18, 26, 3, 11, 19, 27, 4, 12, 20, 28, 5, 13, 21, 29, 6, 14, 22, 30, 7, 15, 23, 31] or another subblock interleaving order, the second interleaving shown in FIG. 5A or the partial interleaving shown in FIG. 5B may also be used, to improve a retransmission granularity supported by rateless polar coding, improve flexibility of a system design, and obtain better performance.

In this embodiment of this application, a manner of not performing subblock interleaving in a large subblock group after the retransmission polar encoding, but directly performing partial second interleaving after the subblock group may be further used. Refer to 211 on the right side of FIG. 2. An encoding apparatus performs retransmission polar encoding on a first bit sequence 221 during data retransmission, to obtain a second bit sequence 208, and outputs one or more bits in the second bit sequence 208 in a unit of subblock. The first bit sequence 211 includes a part of information bits 227 of an input bit sequence 223 for initial data transmission. A quantity of bits scheduled to convey the first bit sequence 211 is E Each subblock group includes Z=4 subblocks, and a length of each subblock is L. E is not an integer multiple of a bit length LZ of a subblock group, for example, E=9L. The encoding apparatus outputs the one or more bits in the second bit sequence 208 in the unit of subblock in the following manner. The encoding apparatus selects, from the second bit sequence 208, an integer quantity, obtained by rounding down E/(L*Z), of subblock groups, for example, two subblock groups or eight subblocks, to form a fourth bit sequence whose bit length is E0. Subblock interleaving is not performed on the fourth bit sequence. The encoding apparatus performs second interleaving on one subblock group after the integer quantity of subblock groups, to obtain a bit sequence obtained through the second interleaving. The second interleaving may be row-column interleaving, random interleaving, triangular interleaving, reverse interleaving, or another interleaving manner. This is not limited in this disclosure. The encoding apparatus determines a fifth bit sequence from the bit sequence obtained through the second interleaving, where a bit length of the fifth bit sequence is E-E0 or a length of one subblock. The encoding apparatus obtains, based on the fourth bit sequence on which interleaving is not performed and the fifth bit sequence obtained through the second interleaving, the one or more bits to be output in the second bit sequence 208. In this way, only the second interleaving may be implemented by using a small interleaving buffer, and large subblock interleaving does not need to be implemented, thereby saving computing resources. The initial transmission polar encoding 203 may be performed before the retransmission polar encoding 205, to implement IR-HARQ. Alternatively, the initial transmission polar encoding 203 and the retransmission polar encoding 205 may be performed simultaneously, to implement a long polar code. An initial transmission polar code and a retransmission polar code may be separately self-decodable, thereby improving reliability.

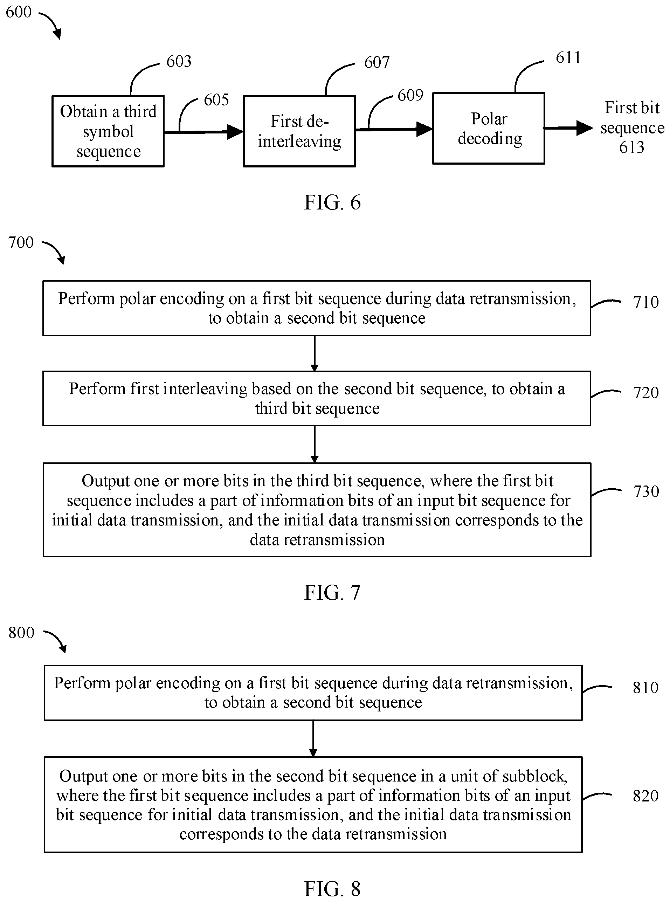

FIG. 6 is a diagram of a structure of a decoder side according to an embodiment of this application. At a decoder side 600, a decoding apparatus obtains a third symbol sequence 605 during data retransmission at 603. The third symbol sequence 605 corresponds to the third bit sequence 231 in FIG. 2. The decoding apparatus performs first de-interleaving 607 based on the third symbol sequence 231, to obtain a second symbol sequence 609. The first de-interleaving 607 is symbol de-interleaving. The second symbol sequence 609 corresponds to the second bit sequence 208 in FIG. 2. The decoding apparatus performs polar decoding, for example, retransmission polar decoding, on the second bit sequence 208, to obtain a first bit sequence 221. The first bit sequence 221 includes a bit sequence 229, and the bit sequence 229 is a copy of a part of information bits 227 of an input bit sequence 223 for initial data transmission. A retransmission symbol sequence 601 received by the decoding apparatus may be determined based on a resource scheduled to convey the first bit sequence 221. In this way, flexible adaptation to a scheduled resource can be implemented, and a conflict between a code structure and a random retransmission resource can be resolved during data retransmission, thereby implementing performance optimization. The first de-interleaving 607 may be any one of random de-interleaving, triangular de-interleaving, row-column de-interleaving, or reverse de-interleaving, and the de-interleaving is flexibly implemented in a plurality of manners. In this embodiment of the present disclosure, the decoding apparatus may obtain the third symbol sequence 605 by receiving the retransmission symbol sequence during the retransmission, and adding a padding symbol sequence to the retransmission symbol sequence. The retransmission symbol sequence corresponds to the one or more bits of the third bit sequence 231 in FIG. 2. In this way, flexible adaptation to a subblock length can be implemented.

In this embodiment of this application, polar decoding 611 may be first polar decoding, and the third symbol sequence 605 is generated for retransmitting the first bit sequence 211. Before receiving the retransmission, a decoder uses second polar decoding to obtain the input bit sequence 223 for the initial data transmission, and then performs retransmission receiving. Two subcodes of long polar decoding are constituted through the first polar decoding and the second polar decoding, thereby obtaining better decoding performance

In this embodiment of this application, when performing the first de-interleaving, the decoding apparatus may divide the third symbol sequence 231 into a plurality of subblocks, for example, perform the first de-interleaving on 32 subblocks with an equal length, to obtain the second symbol sequence 609. In this way, the first de-interleaving may be implemented in a simplified manner, thereby reducing a calculation amount.

In this embodiment of this application, when numbers of the subblocks in subblock interleaving are 0, 1, ..., and 31, a subblock interleaving order corresponding to an order of the 32 subblock-de-interleaved subblocks included in the third symbol sequence 231 may be [0, 1, 2, 4, 3, 5, 6, 7, 8, 16, 9, 17, 10, 18, 11, 19, 12, 20, 13, 21, 14, 22, 15, 23, 24, 25, 26, 28, 27, 29, 30, 31], to be compatible with NR; or [0, 4, 8, 12, 1, 5, 11, 13, 2, 6, 10, 14, 3, 7, 11, 15, 16, 20, 24, 28, 17, 21, 25, 29, 18, 22, 26, 30, 19, 23, 27, 31], to obtain optimal performance; or [0, 8, 16, 24, 1, 9, 17, 25, 2, 10, 18, 26, 3, 11, 19, 27, 4, 12, 20, 28, 5, 13, 21, 29, 6, 14, 22, 30, 7, 15, 23, 31], to simplify implementation. When numbers of the subblocks in subblock interleaving are 1, 2, ..., and 32, a subblock interleaving order corresponding to an order of the 32 subblock-de-interleaved subblocks included in the third symbol sequence 231 may be [1, 2, 3, 5, 4, 6, 7, 8, 9, 17, 10, 18, 11, 19, 12, 20, 13, 21, 14, 22, 15, 23, 16, 24, 25, 26, 27, 29, 28, 30, 31, 32], [1, 5, 9, 13, 2, 6, 10, 14, 3, 7, 11, 15, 4, 8, 12, 16, 17, 21, 25, 29, 18, 22, 26, 30, 19, 23, 27, 31, 20, 24, 28, 32], or [1, 9, 17, 25, 2, 10, 18, 26, 3, 11, 19, 27, 4, 12, 20, 28, 5, 13, 21, 29, 6, 14, 22, 30, 7, 15, 23, 31, 8, 16, 24, 32].

In this embodiment of this application, for the partial interleaving or the second interleaving shown in FIG. 5, the decoding apparatus may correspondingly perform partial de-interleaving or second de-interleaving. If a quantity of symbols scheduled to convey the first bit sequence 211 is E and is not an integer multiple of a symbol length of a subblock group, each subblock group includes Z, for example, 4 subblocks, and a symbol length of each subblock is L, the second de-interleaving is performed. The decoding apparatus selects, from the third symbol sequence 605, an integer quantity, obtained by rounding down E/(L*Z), of subblock groups, for example, two subblock groups, which corresponds to eight subblocks, to form a fourth symbol sequence whose symbol length is E0. The decoding apparatus performs the second de-interleaving on one subblock group after the integer quantity of subblock groups, to obtain a symbol sequence obtained through the second de-interleaving. The second de-interleaving may be row-column de-interleaving, random de-interleaving, triangular de-interleaving, reverse de-interleaving, or another de-interleaving manner. This is not limited in this disclosure. The decoding apparatus determines a fifth symbol sequence from the symbol sequence obtained through the second de-interleaving, where a symbol length of the fifth symbol sequence is E-E0. The decoding apparatus obtains the second symbol sequence based on the fourth symbol sequence, the fifth symbol sequence, and the padding symbol sequence. In this way, the de-interleaving can be implemented at a finer granularity, thereby improving system performance. In this embodiment of this application, the second de-interleaving includes row-column de-interleaving, to simplify implementation.

In this embodiment of this application, partial de-interleaving or second de-interleaving may be directly implemented without implementing large block de-interleaving. Details are as follows: The decoding apparatus may obtain a third symbol sequence 605 during data retransmission. The decoding apparatus performs second de-interleaving on a part of the third symbol sequence 605 to obtain a second symbol sequence 609. The decoding apparatus performs polar decoding 611 on the second symbol sequence 609 to obtain a first bit sequence 613. The first bit sequence 221 includes a bit sequence 229, and the bit sequence 229 is a copy of a part of information bits 227 of an input bit sequence 223 for initial data transmission. The initial data transmission corresponds to the data retransmission. A quantity of bits scheduled to convey the first bit sequence 613 is E and is not an integer multiple of a bit length of a subblock group, each subblock group includes Z, for example, 4 subblocks, and a bit length of each subblock is L. The decoding apparatus performs the second de-interleaving on the part of the third symbol sequence 605 in the following manner to obtain the second symbol sequence 609. The decoding apparatus selects, from the third symbol sequence 605, an integer quantity, obtained by rounding down E/(L*Z), of subblock groups, to form a fourth symbol sequence whose length is E0. The decoding apparatus performs the second de-interleaving on one subblock group after the integer quantity of subblock groups, to obtain a symbol sequence obtained through the second de-interleaving. The second de-interleaving may be row-column de-interleaving, random de-interleaving, triangular de-interleaving, reverse de-interleaving, or another de-interleaving manner. This is not limited in this disclosure. The decoding apparatus determines a fifth symbol sequence from the symbol sequence obtained through the second de-interleaving, where a symbol length of the fifth symbol sequence is E-E0. The decoding apparatus obtains the second symbol sequence 609 based on the fourth symbol sequence, the fifth symbol sequence, and the padding symbol sequence. In this way, only the second de-interleaving may be implemented by using a small quantity of resources, thereby improving system efficiency. In this embodiment of the present disclosure, the decoding apparatus may obtain the third symbol sequence 605 by receiving the retransmission symbol sequence during the retransmission, and adding a padding symbol sequence to the retransmission symbol sequence. The retransmission symbol sequence corresponds to the one or more bits of the third bit sequence 231 in FIG. 2. In this way, flexible adaptation to a subblock length can be implemented.

FIG. 7 is a flowchart 700 of a communication method implemented at an encoding apparatus according to an embodiment of this application. In a possible implementation, a method 700 may be implemented by a terminal device 101 or a network device 103 in an example environment 100. In other possible implementations, the method 700 may alternatively be implemented by another electronic apparatus independent of the example environment 100. For example, the following describes the method 700 by using an example in which the terminal device 101 in the example environment 100 implements the method 700.

In 710, the encoding apparatus of the terminal device 101 performs polar encoding on a first bit sequence during data retransmission, to obtain a second bit sequence. In 720, the encoding apparatus of the terminal device 101 performs first interleaving based on the second bit sequence to obtain a third bit sequence. In 730, the encoding apparatus of the terminal device 101 outputs one or more bits in the third bit sequence, where the first bit sequence includes a part of information bits of an input bit sequence for initial data transmission, and the initial data transmission corresponds to the data retransmission.

In some embodiments, that the encoding apparatus performs the first interleaving includes: The encoding apparatus divides the second bit sequence into a plurality of subblocks; and performs subblock interleaving on the plurality of subblocks, to obtain the third bit sequence. In some embodiments, the plurality of subblocks include same quantities of bits. In some embodiments, the second bit sequence is divided into 32 subblocks. In some embodiments, an order of the 32 subblock-interleaved subblocks included in the third bit sequence is one of the following: [0, 1, 2, 4, 3, 5, 6, 7, 8, 16, 9, 17, 10, 18, 11, 19, 12, 20, 13, 21, 14, 22, 15, 23, 24, 25, 26, 28, 27, 29, 30, 31]; [0, 4, 8, 12, 1, 5, 11, 13, 2, 6, 10, 14, 3, 7, 11, 15, 16, 20, 24, 28, 17, 21, 25, 29, 18, 22, 26, 30, 19, 23, 27, 31]; or [0, 8, 16, 24, 1, 9, 17, 25, 2, 10, 18, 26, 3, 11, 19, 27, 4, 12, 20, 28, 5, 13, 21, 29, 6, 14, 22, 30, 7, 15, 23, 31].

In some embodiments, the first interleaving is bit interleaving. In some embodiments, a quantity of the one or more bits sent by the encoding apparatus is determined based on a resource scheduled to convey the first bit sequence.

In some embodiments, a quantity of bits scheduled to convey the first bit sequence is E and is not an integer multiple of a bit length of a subblock group, each subblock group includes Z subblocks, and a bit length of each subblock is L. The encoding apparatus further selects, from the third bit sequence, an integer quantity, obtained by rounding down E/(L*Z), of subblock groups, to form a fourth bit sequence whose bit length is E0. The encoding apparatus further performs second interleaving on one subblock group after the integer quantity of subblock groups, to obtain a bit sequence obtained through the second interleaving. The encoding apparatus further determines a fifth bit sequence from the bit sequence obtained through the second interleaving, where a bit length of the fifth bit sequence is E-E0. The encoding apparatus further obtains, based on the fourth bit sequence and the fifth bit sequence, the one or more bits to be output in the third bit sequence.

In some embodiments, the second interleaving includes at least one of row-column interleaving, random interleaving, triangular interleaving, or reverse interleaving; and a value of L is one of 2, 4, and 8. In some embodiments, the first interleaving includes at least one of random interleaving, triangular interleaving, row-column interleaving, or reverse interleaving.

In some embodiments, the polar encoding is first polar encoding, and the third bit sequence is generated for retransmitting the first bit sequence. Before the encoding apparatus performs the retransmission, a sixth bit sequence used to initially transmit the input bit sequence is generated and sent by the encoding apparatus through second polar encoding. The encoding apparatus performs the polar encoding on the first bit sequence in the following manner, to obtain the second bit sequence. The encoding apparatus performs the first polar encoding on the first bit sequence, to obtain a first-polar-encoded sequence. The encoding apparatus obtains the second bit sequence based on exclusive OR on the first-polar-encoded sequence and the sixth bit sequence. Two subcodes of a long polar code are constituted through the first polar encoding and the second polar encoding.

FIG. 8 is a flowchart 800 of a communication method implemented at an encoding apparatus according to another embodiment of this application. In a possible implementation, a method 800 may be implemented by a terminal device 101 or a network device 103 in an example environment 100. In other possible implementations, the method 800 may alternatively be implemented by another electronic apparatus independent of the example environment 100. For example, the following describes the method 800 by using an example in which the terminal device 101 in the example environment 100 implements the method 800.

In 810, the encoding apparatus of the terminal device 101 performs polar encoding on a first bit sequence during data retransmission, to obtain a second bit sequence.

In 810, the encoding apparatus of the terminal device 101 outputs one or more bits in the second bit sequence in a unit of subblock, where the first bit sequence includes a part of information bits of an input bit sequence for initial data transmission, and the initial data transmission corresponds to the data retransmission. A quantity of bits scheduled to convey the first bit sequence is E and is not an integer multiple of a bit length of a subblock group, each subblock group includes Z subblocks, and a bit length of each subblock is L. The encoding apparatus of the terminal device 101 outputs the one or more bits in the second bit sequence in the unit of subblock in the following manner. The encoding apparatus of the terminal device 101 selects, from the second bit sequence, an integer quantity, obtained by rounding down E/(L*Z), of subblock groups, to form a fourth bit sequence whose bit length is E0. The encoding apparatus of the terminal device 101 performs second interleaving on a subblock group after the integer quantity of subblock groups, to obtain a bit sequence obtained through the second interleaving. The encoding apparatus of the terminal device 101 determines a fifth bit sequence from the bit sequence obtained through the second interleaving, where a bit length of the fifth bit sequence is E-E0. The encoding apparatus of the terminal device 101 obtains, based on the fourth bit sequence and the fifth bit sequence, the one or more bits to be output in the second bit sequence.

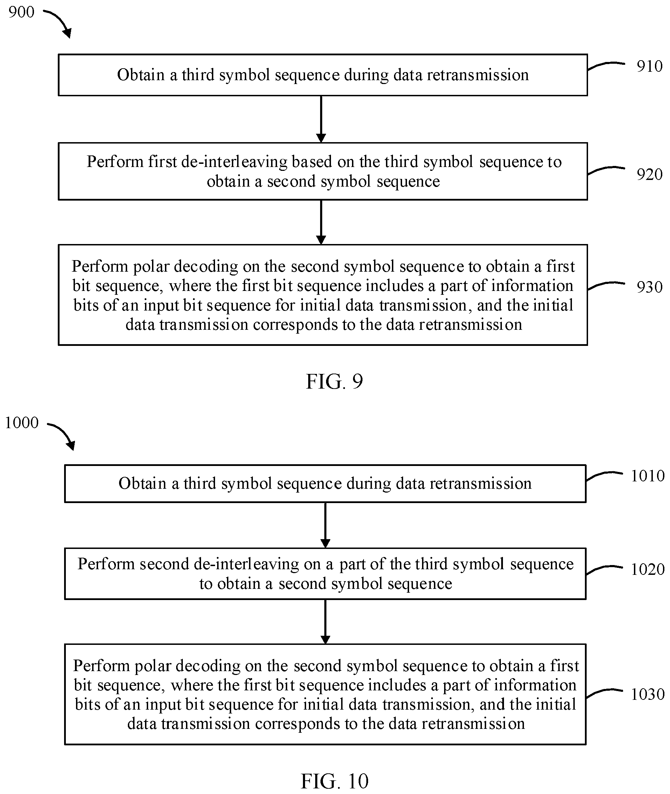

FIG. 9 is a flowchart 900 of a communication method implemented at a decoding apparatus according to an embodiment of this application. In a possible implementation, a method 900 may be implemented by a network device 103 or a terminal device 101 in an example environment 100. In other possible implementations, the method 900 may alternatively be implemented by another electronic apparatus independent of the example environment 100. For example, the following describes the method 900 by using an example in which the network device 103 in the example environment 100 implements the method 900.

In 910, the decoding apparatus of the network device 103 obtains a third symbol sequence during data retransmission. In 920, the decoding apparatus of the network device 103 performs first de-interleaving based on the third symbol sequence to obtain a second symbol sequence. In 930, the decoding apparatus of the network device 103 performs polar decoding on the second symbol sequence to obtain a first bit sequence. The first bit sequence includes a part of information bits of an input bit sequence for initial data transmission, and the initial data transmission corresponds to the data retransmission.

In some embodiments, that the decoding apparatus of the network device 103 performs the first de-interleaving includes: The decoding apparatus of the network device 103 divides the third symbol sequence into a plurality of subblocks. The decoding apparatus of the network device 103 performs subblock de-interleaving on the plurality of subblocks to obtain the second symbol sequence. In some embodiments, the plurality of subblocks include same quantities of symbols. In some embodiments, the third symbol sequence is divided into 32 subblocks. In some embodiments, a subblock interleaving order corresponding to an order of the 32 subblock-de-interleaved subblocks included in the third symbol sequence is one of the following: [0, 1, 2, 4, 3, 5, 6, 7, 8, 16, 9, 17, 10, 18, 11, 19, 12, 20, 13, 21, 14, 22, 15, 23, 24, 25, 26, 28, 27, 29, 30, 31]; [0, 4, 8, 12, 1, 5, 11, 13, 2, 6, 10, 14, 3, 7, 11, 15, 16, 20, 24, 28, 17, 21, 25, 29, 18, 22, 26, 30, 19, 23, 27, 31]; or [0, 8, 16, 24, 1, 9, 17, 25, 2, 10, 18, 26, 3, 11, 19, 27, 4, 12, 20, 28, 5, 13, 21, 29, 6, 14, 22, 30, 7, 15, 23, 31].

In some embodiments, the first de-interleaving is symbol de-interleaving. In some embodiments, optionally, that the decoding apparatus of the network device 103 obtains the third symbol sequence during the data retransmission includes: The decoding apparatus receives a retransmission symbol sequence during the data retransmission; and add a padding symbol sequence to the retransmission symbol sequence to obtain the third symbol sequence. In some embodiments, a quantity of retransmission symbol sequences is determined based on a resource scheduled to convey the first bit sequence. In some embodiments, a quantity of symbols scheduled to convey the first bit sequence is E and is not an integer multiple of a symbol length of a subblock group, each subblock group includes Z subblocks, and a symbol length of each subblock is L. The decoding apparatus of the network device 103 further selects, from the third symbol sequence, an integer quantity, obtained by rounding down E/(L*Z), of subblock groups, to form a fourth symbol sequence whose symbol length is E0. The decoding apparatus of the network device 103 performs second de-interleaving on a subblock group after the integer quantity of subblock groups, to obtain a symbol sequence obtained through the second de-interleaving. The decoding apparatus of the network device 103 determines a fifth symbol sequence from the symbol sequence obtained through the second de-interleaving, where a symbol length of the fifth symbol sequence is E-E0. The decoding apparatus of the network device 103 obtains the second symbol sequence based on the fourth symbol sequence, the fifth symbol sequence, and the padding symbol sequence.

In some embodiments, the second de-interleaving includes at least one of row-column de-interleaving, random de-interleaving, triangular de-interleaving, or reverse de-interleaving, and a value of L is one of 2, 4, and 8. In some embodiments, the first de-interleaving includes at least one of random de-interleaving, triangular de-interleaving, row-column de-interleaving, or reverse de-interleaving.

In some embodiments, the polar decoding is first polar decoding, and the third symbol sequence is generated for retransmitting the first bit sequence. Before retransmission, the decoding apparatus of the network device 103 uses second polar decoding to obtain the input bit sequence for the initial data transmission. Two subcodes of long polar decoding are constituted through the first polar decoding and the second polar decoding.

FIG. 10 is a flowchart 1000 of a communication method implemented at a decoding apparatus according to another embodiment of this application. In a possible implementation, a method 1000 may be implemented by a network device 103 or a terminal device 101 in an example environment 100. In other possible implementations, the method 1000 may alternatively be implemented by another electronic apparatus independent of the example environment 100. For example, the following describes the method 1000 by using an example in which the network device 103 in the example environment 100 implements the method 1000.

In 1010, the decoding apparatus of the network device 103 obtains a third symbol sequence during data retransmission. In 1020, the decoding apparatus of the network device 103 performs second de-interleaving on a part of the third symbol sequence to obtain a second symbol sequence. In 1030, the decoding apparatus of the network device 103 performs polar decoding on the second symbol sequence to obtain a first bit sequence. The first bit sequence includes a part of information bits of an input bit sequence for initial data transmission, and the initial data transmission corresponds to the data retransmission. A quantity of bits scheduled to convey the first bit sequence is E and is not an integer multiple of a bit length of a subblock group, each subblock group includes Z subblocks, and a bit length of each subblock is L. In addition, the decoding apparatus of the network device 103 performs the second de-interleaving on the part of the third symbol sequence in the following manner, to obtain the second symbol sequence. The decoding apparatus of the network device 103 selects, from the third symbol sequence, an integer quantity, obtained by rounding down E/(L*Z), of subblock groups, to form a fourth symbol sequence whose length is E0. The decoding apparatus of the network device 103 performs the second de-interleaving on one subblock group after the integer quantity of subblock groups, to obtain a symbol sequence obtained through the second de-interleaving. The decoding apparatus of the network device 103 determines a fifth symbol sequence from the symbol sequence obtained through the second de-interleaving, where a symbol length of the fifth symbol sequence is E-E0. The decoding apparatus of the network device 103 obtains the second symbol sequence based on the fourth symbol sequence, the fifth symbol sequence, and a padding symbol sequence. Optionally, the decoding apparatus of the network device 103 adds a padding symbol sequence to a retransmission symbol sequence, to obtain the third symbol sequence during the data retransmission.

In the foregoing embodiments provided in this application, the method provided in embodiments of this application is separately described from perspectives of the network device, the terminal device, and interaction between the network device and the terminal device. To implement functions in the method provided in embodiments of this application, the network device and the terminal device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

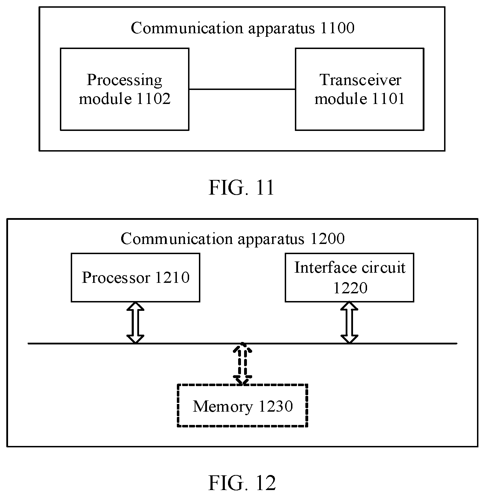

FIG. 11 and FIG. 12 each are a diagram of a structure of a possible communication apparatus according to an embodiment of this application. The communication apparatuses may implement a function of the terminal device or the network device in the foregoing method embodiments, so that beneficial effect of the foregoing method embodiments can also be implemented. In embodiments of this application, the communication apparatus may be the terminal device 101 shown in FIG. 1, the network device 103 shown in FIG. 1, or a module (for example, a chip) used in the terminal device or the network device.

As shown in FIG. 11, the communication apparatus 1100 includes a transceiver module 1101 and a processing module 1102. The communication apparatus 1100 may be configured to implement the function of the terminal device 101 or the network device 103 in the method embodiments shown in FIG. 7 to FIG. 10.

When the communication apparatus 1100 is configured to implement the function of the terminal device in the method embodiment shown in FIG. 7, the transceiver module 1101 is configured to output one or more bits in a third bit sequence. The processing module 1102 is configured to: perform polar encoding on a first bit sequence during data retransmission, to obtain a second bit sequence, and perform first interleaving based on the second bit sequence to obtain the third bit sequence. The first bit sequence includes a part of information bits of an input bit sequence for initial data transmission, and the initial data transmission corresponds to the data retransmission.

When the communication apparatus 1100 is configured to implement the function of the terminal device in the method embodiment shown in FIG. 8, the transceiver module 1101 may alternatively be configured to output one or more bits in a second bit sequence in a unit of subblock. Alternatively, the processing module 1102 may be configured to perform polar encoding on a first bit sequence during data retransmission, to obtain a second bit sequence. The first bit sequence includes a part of information bits of an input bit sequence for initial data transmission, and the initial data transmission corresponds to the data retransmission. A quantity of bits scheduled to convey the first bit sequence is $E$ and is not an integer multiple of a bit length of a subblock group, each subblock group includes Z subblocks, and a bit length of each subblock is L. Alternatively, the processing module 1102 may perform second interleaving on one subblock group after an integer quantity of subblock groups, to obtain a bit sequence obtained through the second interleaving; determine a fifth bit sequence from the bit sequence obtained through the second interleaving, where a bit length of the fifth bit sequence is $E-E_0$; and obtains, based on the fourth bit sequence and the fifth bit sequence, the one or more bits to be output in the second bit sequence

When the communication apparatus 1100 is configured to implement the function of the network device in the method embodiment shown in FIG. 9, the transceiver module 1101 is configured to obtain a third symbol sequence during data retransmission. The processing module 1102 is configured to: perform first de-interleaving based on the third symbol sequence to obtain a second symbol sequence, and perform polar decoding on the second symbol sequence to obtain a first bit sequence. The first bit sequence includes a part of information bits of an input bit sequence for initial data transmission, and the initial data transmission corresponds to the data retransmission.

When the communication apparatus 1100 is configured to implement the function of the network device in the method embodiment shown in FIG. 10, the transceiver module 1101 is configured to obtain a third symbol sequence during data retransmission. The processing module 1102 is configured to: perform second de-interleaving on a part of the third symbol sequence to obtain a second symbol sequence; and perform polar decoding on the second symbol sequence to obtain a first bit sequence. The first bit sequence includes a part of information bits of an input bit sequence for initial data transmission, and the initial data transmission corresponds to the data retransmission. A quantity of bits scheduled to convey the first bit sequence is E and is not an integer multiple of a bit length of a subblock group, each subblock group includes Z subblocks, and a bit length of each subblock is L. The processing module 1102 is further configured to: select, from the third symbol sequence, an integer quantity, obtained by rounding down E/(L*Z), of subblock groups, to form a fourth symbol sequence whose length is E0; perform second de-interleaving on one subblock group after the integer quantity of subblock groups, to obtain a symbol sequence obtained through the second de-interleaving; determine a fifth symbol sequence from the symbol sequence obtained through the second de-interleaving, where a symbol length of the fifth symbol sequence is E-E0; and obtain the second symbol sequence based on the fourth symbol sequence, the fifth symbol sequence, and a padding symbol sequence.

For more detailed descriptions of the transceiver module 1101 and the processing module 1102, refer to related descriptions in the foregoing method embodiments. Details are not described herein again.

As shown in FIG. 12, the communication apparatus 1200 includes a processor 1210 and an interface circuit 1220. The processor 1210 and the interface circuit 1220 are coupled to each other. It can be understood that the interface circuit 1220 may be a transceiver or an input/output interface. Optionally, the communication apparatus 1200 may further include a memory 1230, configured to store instructions executed by the processor 1210, input data needed by the processor 1210 to run instructions, or data generated after the processor 1210 runs instructions.

When the communication apparatus 1200 is configured to implement the method in the foregoing method embodiments, the processor 1210 may be configured to perform a function of the processing module 1102, and the interface circuit 1220 may be configured to perform a function of the transceiver module 1101.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a chip used in a network device, the chip in the network device implements a function of the network device in the foregoing method embodiments. The chip in the network device receives information from another module (for example, a radio frequency module or an antenna) in the network device, where the information is sent by a terminal device to the network device. Alternatively, the chip in the network device sends information to another module (for example, a radio frequency module or an antenna) in the network device, where the information is sent by the network device to a terminal device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

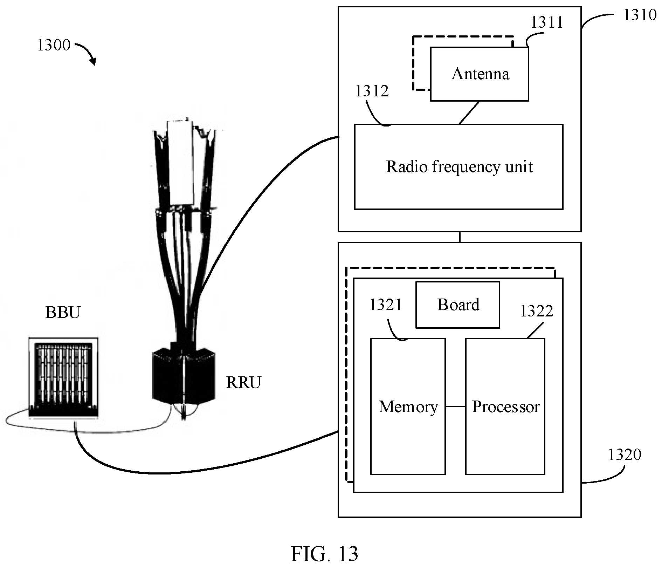

When the apparatus in this embodiment of this application is a network device, the apparatus may be shown in FIG. 13. The apparatus may include one or more radio frequency units, such as a remote radio unit (remote radio unit, RRU) 1310 and one or more baseband units (baseband units, BBUs) (which may also be referred to as a digital unit (digital unit, DU)) 1320. The RRU 1310 may be referred to as a transceiver module. The transceiver module may include a sending module and a receiving module, or the transceiver module may be a module that can implement sending and receiving functions. The transceiver module may correspond to the transceiver module 1101 shown in FIG. 11, that is, may perform an action performed by the transceiver module 1101. Optionally, the transceiver module may also be referred to as a transceiver machine, a transceiver circuit, a transceiver, or the like, and may include at least one antenna 1311 and a radio frequency unit 1312. The RRU 1310 is mainly configured to: receive and send a radio frequency signal, and perform conversion between a radio frequency signal and a baseband signal. The BBU 1310 is mainly configured to: perform baseband processing, control a base station, and the like. The RRU 1310 and the BBU 1320 may be physically disposed together, or may be physically disposed separately, namely, a distributed base station.

The BBU 1320 is a control center of the base station, may also be referred to as a processing module, may correspond to the processing module 1102 shown in FIG. 11, and is mainly configured to complete a baseband processing function, for example, channel coding, multiplexing, modulation, and spectrum spreading. In addition, the processing module may perform an action performed by the processing module 1102. For example, the BBU (the processing module) may be configured to control the base station to perform an operation procedure related to the network device in the foregoing method embodiments.

In an example, the BBU 1320 may include one or more boards. A plurality of boards may jointly support a radio access network (for example, an LTE network) of a single access standard, or may respectively support radio access networks (such as, an LTE network, a 5G network, or another network) of different access standards. The BBU 1320 further includes a memory 1321 and a processor 1322. The memory 1321 is configured to store necessary instructions and data. The processor 1322 is configured to control the base station to perform a necessary action, for example, is configured to control the base station to perform an operation procedure related to the network device in the foregoing method embodiments. The memory 1321 and the processor 1322 may serve one or more boards. In other words, a memory and a processor may be disposed on each board. Alternatively, a plurality of boards may share a same memory and a same processor. In addition, a necessary circuit may further be disposed on each board.

An embodiment of this application provides a communication system. The communication system may include the terminal device in embodiments shown in FIG. 7 and FIG. 8, and include the network device in embodiments shown in FIG. 9 and FIG. 10. Optionally, the terminal device and the network device in the communication system may perform the communication methods shown in FIG. 7 to FIG. 10.

An embodiment of this application further provides a circuit. The circuit may be coupled to a memory, and may be configured to perform a procedure related to the terminal device or the network device in any one of the foregoing method embodiments. A chip system may include a chip, and may further include another component, like a memory or a transceiver.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any regular processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It is to be aware that, in combination with examples described in embodiments disclosed in this specification, modules and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood that, for the purpose of convenient and brief description, for a specific working process of the foregoing systems, apparatuses, and modules, refer to a corresponding process in the foregoing method embodiments. Details are not described herein again.

In the several embodiments provided in this application, it should be understood that the disclosed communication method and apparatus may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The modules described as separate parts may or may not be physically separate, and parts displayed as modules may or may not be physical modules, may be located in one position, or may be distributed on a plurality of network units. A part or all of the units may be selected based on actual requirements to achieve the objectives of the solutions of embodiments.

In addition, functional modules in embodiments of this application may be integrated into one processing module, or each of the modules may exist alone physically, or two or more modules may be integrated into one module.

When the functions are implemented in the form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The computer-readable storage medium may be any usable medium that can be accessed by a computer. This is used as an example but is not limited to: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage, a magnetic disk storage medium or another magnetic storage device, or any other medium that can be used to carry or store expected program code in a form of an instruction or a data structure and that can be accessed by a computer.

As used in this specification, the term "including" and similar terms should be understood as open inclusion, that is, "including but not limited to". The term "based on" should be understood as "at least partially based on". The term "one embodiment" or "this embodiment" should be understood as "at least one embodiment". Terms such as "first", "second", and the like may refer to different objects or a same object, and are merely used to distinguish between specified objects, but do not imply a specific spatial order, a time order, an importance order, or the like of the specified objects. In some embodiments, a value, a process, a selected item, a determined item, a device, an apparatus, a means, a part, a component, or the like is referred to as "optimal", "lowest", "highest", "minimum", "maximum", or the like. It should be understood that such a description is intended to indicate that a selection may be made among many available functional selections, and that such a selection does not need to be better, lower, higher, smaller, larger, or otherwise preferred than other selections in other aspects or in all aspects. As used in this specification, the term "determining" may cover a variety of actions. For example, "determining" may include operating, calculation, processing, export, investigation, lookup (for example, lookup in a table, database, or another data structure), finding, and the like. In addition, "determining" may include receiving (for example, receiving information), accessing (for example, accessing data in a memory), and the like. In addition, "determining" may include parsing, selecting, choosing, establishing, and the like.

**Claims**

1. A method, comprising:

   performing polar encoding on a first bit sequence during data retransmission, to obtain a second bit sequence;
   performing first interleaving based on the second bit sequence to obtain a third bit sequence; and
   outputting one or more bits in the third bit sequence, wherein
   the first bit sequence comprises a part of information bits of an input bit sequence for initial data transmission, and the initial data transmission corresponds to the data retransmission.

2. The method according to claim 1, wherein performing the first interleaving comprises:

   dividing the second bit sequence into a plurality of subblocks; and
   performing subblock interleaving on the plurality of subblocks, to obtain the third bit sequence.

3. The method according to claim 2, wherein the plurality of subblocks comprise same quantities of bits.

4. The method according to claim 2 or 3, wherein the second bit sequence is divided into 32 subblocks.

5. The method according to claim 4, wherein an order of the 32 subblock-interleaved subblocks comprised in the third bit sequence is one of the following:

   [0, 1, 2, 4, 3, 5, 6, 7, 8, 16, 9, 17, 10, 18, 11, 19, 12, 20, 13, 21, 14, 22, 15, 23, 24, 25, 26, 28, 27, 29, 30, 31];
   [0, 4, 8, 12, 1, 5, 11, 13, 2, 6, 10, 14, 3, 7, 11, 15, 16, 20, 24, 28, 17, 21, 25, 29, 18, 22, 26, 30, 19, 23, 27, 31]; or
   [0, 8, 16, 24, 1, 9, 17, 25, 2, 10, 18, 26, 3, 11, 19, 27, 4, 12, 20, 28, 5, 13, 21, 29, 6, 14, 22, 30, 7, 15, 23, 31].

6. The method according to claim 1, wherein the first interleaving is bit interleaving.

7. The method according to any one of claims 1 to 6, wherein a quantity of the sent one or more bits is determined based on a resource scheduled to convey the first bit sequence.

8. The method according to claim 7, wherein a quantity of bits scheduled to convey the first bit sequence is E and is not an integer multiple of a bit length of a subblock group, each subblock group comprises Z subblocks, and a bit length of each subblock is L; and the method further comprises:

   selecting, from the third bit sequence, an integer quantity, obtained by rounding down E/(L*Z), of subblock groups, to form a fourth bit sequence whose bit length is E0;
   performing second interleaving on a subblock group after the integer quantity of subblock groups, to obtain a bit sequence obtained through the second interleaving;
   determining a fifth bit sequence from the bit sequence obtained through the second interleaving, wherein a bit length of the fifth bit sequence is E-E0; and
   obtaining, based on the fourth bit sequence and the fifth bit sequence, the one or more bits to be output in the third bit sequence.

9. The method according to claim 8, wherein the second interleaving comprises at least one of random interleaving, triangular interleaving, row-column interleaving, or reverse interleaving; and a value of L is one of 2, 4, and 8.

10. The method according to any one of claims 1 to 9, wherein the first interleaving comprises at least one of the following:
    random interleaving, triangular interleaving, row-column interleaving, or reverse interleaving.

11. The method according to any one of claims 1 to 10, wherein the polar encoding is first polar encoding;

    the third bit sequence is generated for retransmitting the first bit sequence;
    before or during the retransmission, a sixth bit sequence used to initially transmit the input bit sequence is generated through second polar encoding; and

performing the polar encoding on the first bit sequence, to obtain the second bit sequence comprises:

performing the first polar encoding on the first bit sequence, to obtain a first-polar-encoded sequence; and
obtaining the second bit sequence based on exclusive OR on the first-polar-encoded sequence and the sixth bit sequence, wherein
two subcodes of a long polar code are constituted through the first polar encoding and the second polar encoding.

12. A method, comprising:

obtaining a third symbol sequence during data retransmission;
performing first de-interleaving based on the third symbol sequence to obtain a second symbol sequence; and
performing polar decoding on the second symbol sequence to obtain a first bit sequence, wherein
the first bit sequence comprises a part of information bits of an input bit sequence for initial data transmission, and the initial data transmission corresponds to the data retransmission.

13. The method according to claim 12, wherein performing the first de-interleaving comprises:

dividing the third symbol sequence into a plurality of subblocks; and
performing subblock de-interleaving on the plurality of subblocks to obtain the second symbol sequence.

14. The method according to claim 13, wherein the plurality of subblocks comprise same quantities of symbols.

15. The method according to claim 13 or 14, wherein the third symbol sequence is divided into 32 subblocks.

16. The method according to claim 15, wherein a subblock interleaving order corresponding to an order of the 32 subblock-de-interleaved subblocks comprised in the third symbol sequence is one of the following:

[0, 1, 2, 4, 3, 5, 6, 7, 8, 16, 9, 17, 10, 18, 11, 19, 12, 20, 13, 21, 14, 22, 15, 23, 24, 25, 26, 28, 27, 29, 30, 31];
[0, 4, 8, 12, 1, 5, 11, 13, 2, 6, 10, 14, 3, 7, 11, 15, 16, 20, 24, 28, 17, 21, 25, 29, 18, 22, 26, 30, 19, 23, 27, 31]; or

[0, 8, 16, 24, 1, 9, 17, 25, 2, 10, 18, 26, 3, 11, 19, 27, 4, 12, 20, 28, 5, 13, 21, 29, 6, 14, 22, 30, 7, 15, 23, 31].

17. The method according to any one of claims 12 to 16, wherein the first de-interleaving is symbol de-interleaving.

18. The method according to any one of claims 12 to 17, wherein obtaining the third symbol sequence during the data retransmission comprises:

receiving a retransmission symbol sequence during the data retransmission; and
adding a padding symbol sequence to the retransmission symbol sequence to obtain the third symbol sequence.

19. The method according to any one of claims 12 to 18, wherein a quantity of retransmission symbol sequences is determined based on a resource scheduled to convey the first bit sequence.

20. The method according to claim 19, wherein a quantity of symbols scheduled to convey the first bit sequence is E and is not an integer multiple of a symbol length of a subblock group, each subblock group comprises Z subblocks, and a symbol length of each subblock is L; and the method further comprises:

selecting, from the third symbol sequence, an integer quantity, obtained by rounding down $E/(L*Z)$, of subblock groups, to form a fourth symbol sequence whose symbol length is E0;
performing second de-interleaving on a subblock group after the integer quantity of subblock groups, to obtain a symbol sequence obtained through the second de-interleaving;
determining a fifth symbol sequence from the symbol sequence obtained through the second de-interleaving, wherein a symbol length of the fifth symbol sequence is E-E0; and
obtaining the second symbol sequence based on the fourth symbol sequence, the fifth symbol sequence, and the padding symbol sequence.

21. The method according to claim 20, wherein the second de-interleaving comprises at least one of row-column de-interleaving, random de-interleaving, triangular de-interleaving, or reverse de-interleaving; and
a value of L is one of 2, 4, and 8.

22. The method according to any one of claims 12 to 21, wherein the first de-interleaving comprises at least one of the following:
random de-interleaving, triangular de-interleaving, row-column de-interleaving, or reverse de-interleaving.

23. The method according to any one of claims 12 to 22, wherein the polar decoding is first polar decoding;

the third symbol sequence is generated for retransmitting the first bit sequence;

before or during the retransmission, second polar decoding is used to obtain the input bit sequence for the initial data transmission; and

two subcodes of long polar decoding are constituted through the first polar decoding and the second polar decoding.

24. An apparatus, comprising:

a polar encoding module, configured to perform polar encoding on a first bit sequence during data retransmission, to obtain a second bit sequence;

an interleaving module, configured to perform first interleaving based on the second bit sequence to obtain a third bit sequence; and

an output module, configured to output one or more bits in the third bit sequence, wherein the first bit sequence comprises a part of information bits of an input bit sequence for initial data transmission, and the initial data transmission corresponds to the data retransmission.

25. An apparatus, comprising:

a symbol sequence receiving module, configured to receive a retransmission symbol sequence during data retransmission;

a padding module, configured to add a padding symbol sequence to the retransmission symbol sequence to obtain a third symbol sequence;

a first de-interleaving module, configured to perform first de-interleaving based on the third symbol sequence to obtain a second symbol sequence; and

a polar decoding module, configured to perform polar decoding on the second symbol sequence to obtain a first bit sequence, wherein the first bit sequence comprises a part of information bits of an input bit sequence for initial data transmission, and the initial data transmission corresponds to the data retransmission.

26. A device, comprising a processor and a memory storing instructions, wherein when the instructions are run by the processor, the method according to any one of claims 1 to 23 is performed.

27. A computer-readable storage medium, wherein the computer-readable storage medium stores machine-executable instructions, and when the machine-executable instructions are executed by a device, the method according to any one of claims 1 to 23 is performed.

28. A computer program product, wherein the computer program product comprises a computer program, and when the computer program is run on an apparatus, the method according to any one of claims 1 to 23 is performed.

100

103

101

**FIG. 1A**

110

| | | | |
|---|---|---|---|
| Source (111) | Source encoding (113) | Channel encoding (115) | Modulation (117) |

| | | | |
|---|---|---|---|
| Sink (125) | Source recovery (123) | Channel decoding (121) | Demodulation (119) |

**FIG. 1B**

130

Fixed bit $u_0$=0     0     0     0     $w_0$

Fixed bit $u_1$=0     0     0     1     $w_1$

Fixed bit $u_2$=0     0     0     0     $w_2$

Information bit $u_3$=0     0     0     1     $w_3$

Fixed bit $u_4$=0     0     0     0     $w_4$

Information bit $u_5$=0     0     1     1     $w_5$

Information bit $u_6$=1     0     0     0     $w_6$

Information bit $u_7$=1     1     1     1     $w_7$

FIG. 1C

FIG. 1D

FIG. 1E

FIG. 1F

FIG. 1G

FIG. 2

EP 4 773 528 A1

FIG. 3

300

301 Code construction

303 Outer concatenated code

305 Bit copying

307 Interleaving

309 Bit mapping

311 Encoding

313 First interleaving

FIG. 4A

FIG. 4B

FIG. 5A

510

| 29 | ← | 30 | ← | 31 |

511

| 26 | 28 | 27 |
| 26 | 28 | 27 |
| 26 | 28 | 27 |

| 23 | ← | 24 | ← | 25 |

| 14 | ← | 22 | ← | 15 |

FIG. 5B

600

603

Obtain a third
symbol
sequence

605

607

First de-
interleaving

609

611

Polar
decoding

First bit
sequence
613

FIG. 6

700

Perform polar encoding on a first bit sequence during data retransmission, to obtain a second bit sequence — 710

Perform first interleaving based on the second bit sequence, to obtain a third bit sequence — 720

Output one or more bits in the third bit sequence, where the first bit sequence includes a part of information bits of an input bit sequence for initial data transmission, and the initial data transmission corresponds to the data retransmission — 730

FIG. 7

800

Perform polar encoding on a first bit sequence during data retransmission, to obtain a second bit sequence — 810

Output one or more bits in the second bit sequence in a unit of subblock, where the first bit sequence includes a part of information bits of an input bit sequence for initial data transmission, and the initial data transmission corresponds to the data retransmission — 820

FIG. 8

900 ⌐

| Obtain a third symbol sequence during data retransmission | ⌐ 910 |

↓

| Perform first de-interleaving based on the third symbol sequence to obtain a second symbol sequence | ⌐ 920 |

↓

| Perform polar decoding on the second symbol sequence to obtain a first bit sequence, where the first bit sequence includes a part of information bits of an input bit sequence for initial data transmission, and the initial data transmission corresponds to the data retransmission | ⌐ 930 |

FIG. 9

1000 ⌐

| Obtain a third symbol sequence during data retransmission | ⌐ 1010 |

↓

| Perform second de-interleaving on a part of the third symbol sequence to obtain a second symbol sequence | ⌐ 1020 |

↓

| Perform polar decoding on the second symbol sequence to obtain a first bit sequence, where the first bit sequence includes a part of information bits of an input bit sequence for initial data transmission, and the initial data transmission corresponds to the data retransmission | ⌐ 1030 |

FIG. 10

Communication apparatus 1100

Processing module 1102

Transceiver module 1101

FIG. 11

Communication apparatus 1200

Processor 1210

Interface circuit 1220

Memory 1230

FIG. 12

FIG. 13

## INTERNATIONAL SEARCH REPORT

| International application No. |
| --- |
| **PCT/CN2023/120838** |

**A.    CLASSIFICATION OF SUBJECT MATTER**

H04L1/00(2006.01)i;  H04L1/18(2023.01)i

According to International Patent Classification (IPC) or to both national classification and IPC

**B.    FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, USTXT, WOTXT, EPTXT, CNKI, IEEE, 3GPP: 重传, 二次传输, 重复传输, 初始, 初传, 首传, 新传, 部分, 极化, 解交织, 去交织, 交织, retransmission, new transmission data, initial transmission, polar, interleaving

**C.    DOCUMENTS CONSIDERED TO BE RELEVANT**

| Category* | Citation of document, with indication, where appropriate, of the relevant passages | Relevant to claim No. |
| --- | --- | --- |
| A | US 2022045784 A1 (MEDIATEK INC.) 10 February 2022 (2022-02-10) description, paragraphs [0025]-[0037] and [0046]-[0048] | 1-28 |
| A | CN 109428675 A (HUAWEI TECHNOLOGIES CO., LTD.) 05 March 2019 (2019-03-05) description, paragraph [0003] | 1-28 |
| A | CN 115085862 A (ZTE CORP. et al.) 20 September 2022 (2022-09-20) description, paragraphs [0031]-[0037] and [0069]-[0096] | 1-28 |
| A | US 2017181104 A1 (SAMSUNG ELECTRONICS CO., LTD. et al.) 22 June 2017 (2017-06-22) entire document | 1-28 |
| A | US 2023291498 A1 (ELECTRONICS AND TELECOMMUNICATIONS RESEARCH INSTITUTE) 14 September 2023 (2023-09-14) entire document | 1-28 |
| A | WO 2023051170 A1 (HUAWEI TECHNOLOGIES CO., LTD.) 06 April 2023 (2023-04-06) entire document | 1-28 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **07 February 2024** | **17 April 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/120838**

| Patent document cited in search report | | | Publication date (day/month/year) | Patent family member(s) | | | Publication date (day/month/year) |
|---|---|---|---|---|---|---|---|
| US | 2022045784 | A1 | 10 February 2022 | US | 11588588 | B2 | 21 February 2023 |
| | | | | TW | 202207642 | A | 16 February 2022 |
| | | | | TWI | 800871 | B | 01 May 2023 |
| CN | 109428675 | A | 05 March 2019 | WO | 2019042370 | A1 | 07 March 2019 |
| CN | 115085862 | A | 20 September 2022 | WO | 2022193918 | A1 | 22 September 2022 |
| US | 2017181104 | A1 | 22 June 2017 | US | 10440659 | B2 | 08 October 2019 |
| | | | | KR | 20170074684 | A | 30 June 2017 |
| | | | | KR | 102474598 | B1 | 06 December 2022 |
| US | 2023291498 | A1 | 14 September 2023 | KR | 20230133618 | A | 19 September 2023 |
| WO | 2023051170 | A1 | 06 April 2023 | | None | | |

Form PCT/ISA/210 (patent family annex) (July 2022)